# EUROPEAN PATENT SPECIFICATION

(11) **EP 2 893 066 B1**
(45) Date of publication and mention of the grant of the patent: **06.10.2021**
(21) Application number: 13835842.9
(22) Date of filing: 27.08.2013
(51) Int. Cl.: B32B 5/02, B32B 5/08, B32B 5/14, B32B 3/26

(54) **INSULATED COMPOSITE FABRICS**
ISOLIERTE VERBUNDSTOFFE
ÉTOFFES COMPOSITES ISOLÉES

(30) Priority: 10.09.2012 US 201261698982 P
(43) Date of publication of application: 15.07.2015
(73) Proprietor: MMI-IPCO, LLC, Lawrence, MA 01842 (US)
(72) Inventor: ROCK, Moshe, Brookline, Massachusetts 02446 (US); VAINER, Gadalia, Melrose, Massachusetts 02176 (US); HUNTER, Jane, Manassas, Virginia 20111 (US); COSTELLO, David, Marblehead, Massachusetts 01945 (US)
(74) Representative: Peterreins Schley
(86) International application number: PCT/US2013/056709
(87) International publication number: WO 2014/039314

(56) References cited:
- EP-A2- 0 705 935
- EP-A2- 0 899 090
- EP-A2- 2 441 864
- US-A- 3 857 753
- US-A1- 2009 031 486
- US-A1- 2011 052 861
- US-A1- 2011 081 517
- US-A1- 2011 119 811
- None

## Description

### TECHNICAL FIELD

This invention relates to textile fabrics, and more particularly to textile fabrics responsive to changes in ambient temperature.

### BACKGROUND

Thermal layering in home textile articles, such as blankets, is considered one of the more effective means for personal insulation available. However, layered fabrics typically add bulk, and it is often difficult to provide levels of insulation appropriate for all areas of a user's body, as different areas of the body have different sensitivities to temperature and different abilities to thermo-regulate, e.g., by sweating.

The same issues also appear in other products, such as upholstery covers, e.g. for home furnishings, for furniture in institutional and contract markets, such as for offices, hotels, conference centers, and for seating in transportation vehicles, such as automobiles, trucks, trains, buses.

Standard textile fabrics have properties set during fabric construction that are maintained irrespective of, e.g., changes in ambient conditions and/or physical activity. These standard products can be effective, e.g., when layered with other textile fabrics for synergistic effect and enhancement of comfort. EP2441864 discloses textile fabrics responsive to changes in ambient temperature. EP0705935 discloses thermally insulating materials. US2011119811 discloses insulated fabrics that incorporate a textile fabric with raised surface. EP1895035 discloses temperature responsive smart textile.

### SUMMARY

According to the disclosure, an insulated composite fabric comprises an inner fabric layer, an outer fabric layer, and an insulating-filler fabric layer enclosed between the inner fabric layer and the outer fabric layer. The insulating-filler fabric layer is a textile fabric with a raised surface on at least one side of the fabric comprising multicomponent fibers formed of at least a first polymer and a second polymer disposed in side-by-side relationship. The first polymer and the second polymer exhibit differential thermal elongation or contraction to cause the multicomponent fibers to bend or curl and reversibly recover in response to changes in temperature, adjusting insulation performance of the textile fabric in response to ambient conditions.

Preferred implementations of this aspect of the disclosure may include one or more of the following additional features. At least one of the first and second polymers is a first thermoplastic polymer with low glass transition temperature. The first polymer is a polypropylene and the second polymer is a polyethylene (e.g., a linear low density polyethylene).The first polymer is a first polypropylene (e.g., an isotactic polypropylene) and the second polymer is a second polypropylene (e.g., a syndiotactic polypropylene) different from the first polypropylene. The multicomponent fibers further comprise a third polypropylene different from both the first polypropylene and the second polypropylene. The yarn has a denier of about 90 and to about 500, e.g., about 160. The yarn has a tenacity of about 0.5 grams-force per denier to about 5.0 grams-force per denier, e.g., about 2.3 grams-force per denier. The yarn has a filament count of 36 to 144. The yarn is a 72 filament yarn. In some examples, the multicomponent fibers have a round cross-section and the first and second polymers are arranged in a side-by-side configuration. The multicomponent fibers have a rectangular cross-section and the first and second polymers are arranged in a side-by-side configuration. The multicomponent fibers have a trilobal cross-section, and the first and second polymer may be arranged in a front-to-back, or left-to-right configuration. The multicomponent fibers have a delta cross-section. In some cases, the multicomponent fibers exhibit an overall average displacement of about -5% to about -60% (e.g., about -20% to about -40%) over a temperature range of from -22°F (-30°C) to 104°F (+40°C). The multicomponent fibers have a rectangular cross-section and serrated surface. The insulating-filler fabric layer can be attached by at least one of the inner and outer layer by sewing, tucking, laminating, or quilting. The inner and outer fabric layers can have the same or contrasting permeability. The inner and outer fabric layers have contrasting aesthetic properties.

An insulated composite fabric comprises an inner fabric layer, an outer fabric layer, and an insulating-filler fabric layer enclosed between the inner fabric layer and the outer fabric layer. The insulating-filler fabric layer is a textile fabric with a raised surface on at least one side of the fabric incorporating yarn comprising multicomponent fibers formed of at least a polypropylene and a polyethylene disposed in side-by-side relationship. The polypropylene and the polyethylene exhibit differential thermal elongation or contraction to cause the multicomponent fibers to bend or curl and reversibly recover in response to changes in temperature, adjusting insulation performance of the insulated composite fabric in response to ambient conditions. The yarn has a denier of about 150 to about 160, and the multicomponent fibers exhibit an overall average displacement of about -5% to about -60% (e.g., about -20% to about - 40%) over a temperature range of from -22°F (-30°C) to 104°F (40°C).

In some examples, the multicomponent fibers have a trilobal cross-section and the polypropylene and the polyethylene are arranged in a front-to-back configuration. The multicomponent fibers consist of about 50% polypropylene and about 50% polyethylene. The multicomponent fibers have a rectangular cross-section and serrated surface. The insulating-filler fabric layer can be attached by at least one of the inner and outer layer by sewing, tucking, laminating, or quilting. The inner and outer fabric layers can have the same or contrasting permeability. The inner and outer fabric layers have contrasting aesthetic properties.

A temperature responsive insulated composite fabric in the form of an article of apparel of or an apparel accessory can be comprised of the composite fabric. A second fabric portion having one or more contrasting properties from the first portion can be selected from contrasting stretch, contrasting water resistance, contrasting insulative properties, and contrasting air permeability.

The second fabric portion is formed of a second insulated composite fabric, the second insulated composite fabric comprising, a second inner fabric layer, a second outer fabric layer, and a second insulating-filler fabric layer enclosed between the second inner fabric layer and the second outer fabric layer. This composite fabric may form a temperature responsive home textile article. The article further comprise a second fabric portion, wherein the first and second fabric portions have one or more contrasting properties selected from contrasting stretch, contrasting water resistance, contrasting insulative properties, and contrasting air permeability. The second fabric portion is formed of a second insulated composite fabric, the second insulated composite fabric comprising: a second inner fabric layer, a second outer fabric layer, and a second insulating-filler fabric layer enclosed between the second inner fabric layer and the second outer fabric layer. The home textile article is selected from among a textile throw and a sleeping bag.

The disclosure features an insulated composite fabric comprising a unitary fabric element having a multiplicity of predetermined discrete regions of contrasting insulative capacities arranged based on insulative needs of corresponding regions of a user's body. At least two of the predetermined, discrete regions of contrasting insulative capacities comprise, in one or more first discrete regions of the unitary fabric element, loop yarn having a first pile height, and in one or more other discrete regions of the unitary fabric element, loop yarn having another pile height different from and relatively greater than the first pile height. The one or more first discrete regions correspond to one or more regions of the user's body having first insulative needs, and the one or more other discrete regions correspond to one or more regions of the user's body having other insulative needs different from and relatively greater than the first insulative needs.

Implementations of this aspect of the disclosure also include one or more of the following features. The insulated composite fabric consists essentially of the unitary fabric element. Additional unitary fabric elements are included in the insulated composite fabric. Each of the multiplicity of predetermined discrete regions extends generally across a width of the insulated composite fabric in a band form. The one or more first discrete regions correspond to one or more of an upper torso, head, and hip of the user's body. The one or more other discrete regions correspond to one or more of lower legs and feet, arms, and shoulders of the user's body. The unitary fabric element comprises a single face raised fabric and/or a double face raised fabric. The unitary fabric element comprises warp knit yarns and/or fibers, circular knit yarns and/or fibers, regular plaited yarns and/or fibers, reverse plaited yarns and/or fibers, or woven yarns and/or fibers. The unitary fabric element comprises a surface containing a chemical resin or a chemical binder for improved pilling resistance and/or abrasion resistance. An air permeability control element is laminated with the unitary fabric element to form a unitary fabric laminate. The air permeability control element is selected from the group consisting of: perforated membrane, crushed adhesive as a layer, foam adhesive as a layer, discontinuous breathable membrane, porous hydrophobic breathable film, and non-porous hydrophilic breathable film. An air and liquid water impermeable element is laminated with the unitary fabric element to form a unitary fabric laminate. The air and liquid water impermeable element is in the form of a breathable film select from the group consisting of: porous hydrophobic film and non-porous hydrophilic film. The unitary fabric element comprises yarns and/or fibers of one or more materials selected from the group consisting of: synthetic yarn and/or fibers, natural yarn and/or fibers, regenerate yarn and/or fibers, and specialty yarn and/or fibers. The synthetic yarn and/or fibers are selected from the group consisting of: polyester yarn and/or fibers, nylon yarn and/or fibers, acrylic yarn and/or fibers, polypropylene yarn and/or fibers, and continuous filament flat or textured or spun yarn made of synthetic staple fibers. The natural yarn and/or fibers are selected from the group consisting of: cotton yarn and/or fibers and wool yarn and/or fibers. The regenerate yarn and/or fibers are selected from the group consisting of: rayon yarn and/or fibers. The specialty yarn and/or fibers are selected from the group consisting of flame retardant yarn and/or fibers. The flame retardant yarn and/or fibers are selected from the group consisting of: flame retardant aramid yarn and/or fibers, and flame retardant polyester yarn and/or fibers. The one or more first discrete regions having a first pile height comprises loop yarn formed to a relatively lower pile using low sinker and/or shrinkable yarn. The one or more first discrete regions having a first pile height comprises loop yarn formed to a relatively lower pile height of up to about 1 mm. The one or more other discrete regions having another pile height different from and relatively greater than the first pile height comprises loop yarn formed to a relatively higher pile height in the range of greater than about 1 mm up to about 20 mm in a single face fabric. The one or more other discrete regions having another pile height different from and relatively greater than the first pile height comprises loop yarn formed to a relatively higher pile height in the range of greater than about 2 mm up to about 40 mm in a double face fabric.

The disclosure features an insulated composite fabric comprising an inner fabric layer, an outer fabric layer, and an insulating fabric layer attached to the outer fabric layer. The insulating fabric layer is a textile fabric having a raised surface facing towards the outer fabric layer. The raised surface includes a plurality of first discrete regions having a first pile height interspersed among a plurality of other discrete regions having contrasting pile height relatively greater than the first pile height.

Implementations of this aspect of the disclosure may also include one or more of the following features. The insulating-filler fabric layer has a terry sinker loop surface including a plurality of discrete regions of no terry sinker loop interspersed among regions of terry sinker loop. The insulating fabric layer has a weight of about 1 ounce (28.3 gms) per square yard (0.84 m²) to about 12 ounces (340.2 gms) per square yard (0.84 m²). The insulating-filler fabric layer is quilted to one or both of the inner fabric layer and the outer fabric layer. The insulating-filler fabric layer is stitched to one or both of the inner fabric layer and the outer fabric layer along a periphery of the insulated composite fabric. The insulating-filler fabric layer is laminated to one or both of the inner fabric layer and the outer fabric layer. The insulating-filler fabric layer is constructed to include face yarn that is positioned generally perpendicular to stitching or backing yarn. The insulating-filler fabric layer has a thickness (bulk) of about 0.1 inch (2.5 mm) to about 4.0 inches (10.2 cms). The first pile height in the first discrete regions is zero. Yarns forming the first discrete regions are relatively finer that yarns forming the other discrete regions. Yarns forming the first discrete regions have a denier per filament (dpf) of about 0.3 to about 5.0. The insulating-filler fabric layer provides insulation of about 0.2 clo/oz² to about 1.6 clo/oz² (where 1 clo equals 0.155 K · m²/W and 1 ounce equals 28.3495 grams). The inner fabric layer comprises a woven fabric or a knit fabric. The knit fabric has single jersey construction, double knit construction, warp knit construction, or mesh construction. The inner fabric layer has air permeability of about 5 ft³/ft²/min (1.5 m³/m²/min) to about 300 ft³/ft²/min (91.4 m³/m²/min), tested according to ASTM D-737 under a pressure difference of 1/2 inch (12.7 mm) of water across the inner fabric layer. The outer fabric layer has air permeability of about 1 ft³/ft²/min (0.3 m³/m²/min) to about 100 ft³/ft²/min (30.5 m³/m²/min), tested according to ASTM D-737 under a pressure difference of 1/2 inch (12.7 mm) of water across the outer fabric layer. The outer fabric layer is treated with durable water repellent, an abrasion resistant coating, camouflage, or infrared radiation reduction. At least one of the inner fabric layer, the outer fabric layer, and the insulating-filler fabric layer includes flame-retardant material and/or is treated to provide flame-retardance. A waterproof membrane is laminated to an inner surface of the outer fabric layer, and disposed between the outer fabric layer and the insulating-filler fabric layer. The waterproof membrane is a vapor permeable membrane or is selected from a porous hydrophobic membrane, a hydrophilic non-porous membrane, and an electrospun membrane.

The disclosure features an insulated composite fabric comprising an inner fabric layer, an outer fabric layer, and a unitary fabric element between the inner fabric layer and the outer fabric layer. The unitary fabric element has a multiplicity of predetermined discrete regions of contrasting insulative capacities. The discrete regions are arranged based on insulative needs of corresponding regions of a user's body. In some implementations, at least two of the predetermined, discrete regions of contrasting insulative capacities comprise, in one or more first discrete regions of the unitary fabric element, loop yarn having a first pile height and/or a first pile density, the one or more first discrete regions corresponding to one or more regions of the user's body having first insulative needs, and in one or more other discrete regions of the unitary fabric element, loop yarn having a second pile height and/or a second pile density. The second pile height is different from and relatively greater than the first pile height and/or the second pile density is different from and relatively greater than the first pile density. The one or more other discrete regions correspond to one or more regions of the user's body having other insulative needs different from and relatively greater than the first insulative needs.

Implementations of this aspect of the disclosure may also include one or more of the following features. The outer fabric layer comprises a jacquard pattern to be exposed as an exterior surface of the insulated composite fabric. The inner fabric layer and/or the outer fabric layer comprise a light weight woven or knit having a density of about 2 oz./yard² (67.8 gms/m²) to about 6 oz./yard² (203.4 gms/m²). The inner fabric layer and/or the outer fabric layer comprise a knit having a density of about 1.0 oz./yard² (33.9 gms/m²) to about 10.0 oz./yard² (339.1 gms/m²). The unitary fabric element is connected to the outer fabric layer and connected to the inner fabric layer by stitching or quilting. The inner layer comprises a multiplicity of predetermined discrete regions of contrasting (or otherwise different) insulative capacities corresponding to the multiplicity of predetermined discrete regions of contrasting insulative capacities of the unitary fabric element. The multiplicity of predetermined discrete regions of the inner fabric comprises: in one or more in one or more first discrete regions of the inner fabric corresponding to the one or more first discrete regions of the unitary fabric element, loop yarn having a third pile height and/or a third pile density, and, in one or more other discrete regions of the inner fabric corresponding to the one or more other discrete regions of the unitary fabric element, loop yarn having a fourth pile height and/or a fourth pile density. The fourth pile height is different from and relatively greater than the third pile height, and/or the fourth pile density is different from and relatively greater than the third pile density. The outer layer comprises a multiplicity of predetermined discrete regions of contrasting insulative capacities corresponding to the multiplicity of predetermined discrete regions of contrasting insulative capacities of the unitary fabric element. The multiplicity of predetermined discrete regions of the outer fabric comprises: in one or more in one or more first discrete regions of the outer fabric corresponding to the one or more first discrete regions of the unitary fabric element, loop yarn having a third pile height and/or a third pile density, and, in one or more other discrete regions of the outer fabric corresponding to the one or more other discrete regions of the unitary fabric element, loop yarn having a fourth pile height and/or a fourth pile density. The fourth pile height is different from and relatively greater than the third pile height, and/or the fourth pile density is different from and relatively greater than the third pile density. The unitary fabric element has an air permeability of about 80 CFM (2,265 L/min.) to about 200 CFM (5,663 L/min.) in the one or more first discrete regions, and an air permeability of about 200 CFM (5,663 L/min.) to about 350CFM (9,911 L/min.) in the one or more other discrete regions. Different regions of the insulated composite fabric have substantially the same or contrasting permeability as the respective regions of the unitary fabric element. The loop yarn in different regions of the one or more second discrete regions of the unitary fabric element have different pile densities. The loop yarn in different regions of the one or more second discrete regions of the unitary fabric element have different pile densities. Different regions of the plurality of other discrete regions have different pile densities.

Other features, objects, and advantages of the invention will be apparent from the description and drawings, and from the claims.

### DESCRIPTION OF DRAWINGS

FIG. 1 is a representation of the surface of a unitary engineered thermal fabric formed with an intricate geometric pattern.
FIG. 2 is a perspective view of a unitary engineered thermal fabric, with regions of relatively high pile, regions of relatively low pile, and regions of no pile.
FIG. 3 is a diagrammatic plan view of an insulated composite fabric with regions of contrasting insulative capacity and performance, arranged by body mapping concepts.
FIG. 3A is a diagrammatic top view of a segment of another insulated composite fabric with regions of contrasting insulative capacity and performance.
FIG. 4 is diagrammatic plan view of another insulated composite fabric with band-form regions of contrasting insulative capacity and performance.
FIG. 4A is a diagrammatic plan view of a segment of another insulated composite fabric with regions of contrasting insulative capacity and performance.
FIG. 5 is an end section view of a unitary engineered thermal fabric, with regions of relatively greater bulk, regions of no bulk, and regions of relatively lesser bulk on one surface.
FIG. 6 is an end section view of another unitary engineered thermal fabric, with regions of relatively greater bulk, regions of no bulk, and regions of relatively lesser bulk on both surfaces.
FIG. 7 is a perspective view of a segment of a circular knitting machine.
FIGS. 8-14 are sequential views of a cylinder latch needle in a reverse plaiting circular knitting process, e.g., for use in forming a unitary engineered thermal fabric.
FIG. 15 is a diagrammatic end section view of a tubular knit unitary engineered thermal fabric formed during knitting.
FIGS. 16 and 17 are diagrammatic end section views of unitary engineered thermal fabrics, finished on one surface (FIG. 16) or finished on both surfaces (FIG. 17), respectively.
FIG. 18 is an end section view of an insulated composite fabric.
FIG. 19 is an end section view of an insulating-filler fabric in the form of a double face warp knit fabric.
FIG. 20 is an end section view of an insulating-filler fabric in the form of a double face knit fabric with reverse plaited terry sinker loop knit construction.
FIG. 21 is an end section view of an insulating-filler fabric in the form of a single face fabric.
FIG. 22 is a side section view of a unitary engineered thermal fabric.
FIG. 23 is end section view of insulated composite fabric having a light-duty construction.
FIG. 24 is end section view of insulated composite fabric having a medium-duty construction.
FIG. 25 is end section view of insulated composite fabric having a heavy-duty construction.
FIG. 26 is an end section view of an example of an insulated composite fabric for use in a first region of an insulated composite fabric.
FIG. 27 is an end section view of an example of an insulated composite fabric for use in a second region of an insulated composite fabric.
FIG. 28 is a plan view of an insulating-filler fabric having a pile surface that includes no pile regions interspersed among regions of pile.
FIGS. 29A to 29E are end section views illustrating insulating-filler fabrics having void regions (i.e., regions of relatively lower pile or no pile).
FIGS. 30A to 30C are end section views of alternative embodiments of an insulated composite fabric laminate.
FIG. 31A is an end section view of a two layer insulated composite fabric.
FIG. 31B is an end section view of a two layer insulated composite fabric laminate.
FIG. 32 is an end section view of an insulated composite fabric having a waterproof membrane.
FIGS. 33A is an infra-red photo of an insulated composite fabric over a thermal object, the insulated composite fabric being formed of a unitary engineered thermal fabric.
FIGS. 33B is an infra-red photo of an insulated composite fabric over a thermal object, the insulated composite fabric being formed of a composite fabric including an inner fabric layer, an outer fabric layer, and the unitary engineered thermal fabric of FIG. 33A between the inner and the outer fabric layers.
FIGS. 34A-34C are detailed views of a temperature responsive bi-component fiber.
FIGS. 35A-35B are cross-sectional views of temperature responsive smart textile fabric.
FIGS. 36A and 36B are detailed views of one embodiment of a temperature responsive bi-component fiber having a substantially rectangular cross-sectional shape.
FIG. 37 is a detailed view of a temperature responsive bi-component fiber having serrated surfaces.
FIGS. 38-41 illustrate various approaches for securing individual fiber components of a multicomponent fiber together.
FIGS. 42-43 are photographs of co-extruded fibers having round cross-sections and trilobal cross-sections, respectively.

### DETAILED DESCRIPTION

An insulated composite fabric, e.g., a textile home furnishings blanket or an outdoor blanket, may be tailored to the insulative requirements of different regions of the projected user's body, thus to optimize the comfort level of the person while sleeping. In most cases, the regions of a person's lower legs and feet and a person's arms and shoulders tend to be relatively more susceptible to cold and thus it will be desirable to provide a relatively higher level of insulation, e.g. relatively higher pile height and/or higher fiber or pile density, for greater comfort and sleep, while, in contrast, the region of a person's upper torso and regions of the person's hips and head, especially from the sides, tend to require relatively less insulation. In some implementations, the insulated composite fabric is a stand-alone, unitary engineered thermal fabric with regions of contrasting insulative capacity and performance arranged by body mapping concepts. Different regions of the unitary engineered thermal fabric can be formed of yarns having the same denier or different deniers. The insulated composite fabric can also be a composite fabric formed by stitching, quilting, attaching the unitary engineered thermal fabric with additional layers, or inserting the unitary engineered thermal fabric between two layers.

The term "pile," as used herein, includes pile surfaces formed by any desired method, including but not limited to: loops, cut loops, loops cut on the knitting machine, loops cut off the knitting machine (i.e., after the fabric is removed from the knitting machine), and raised fibers.

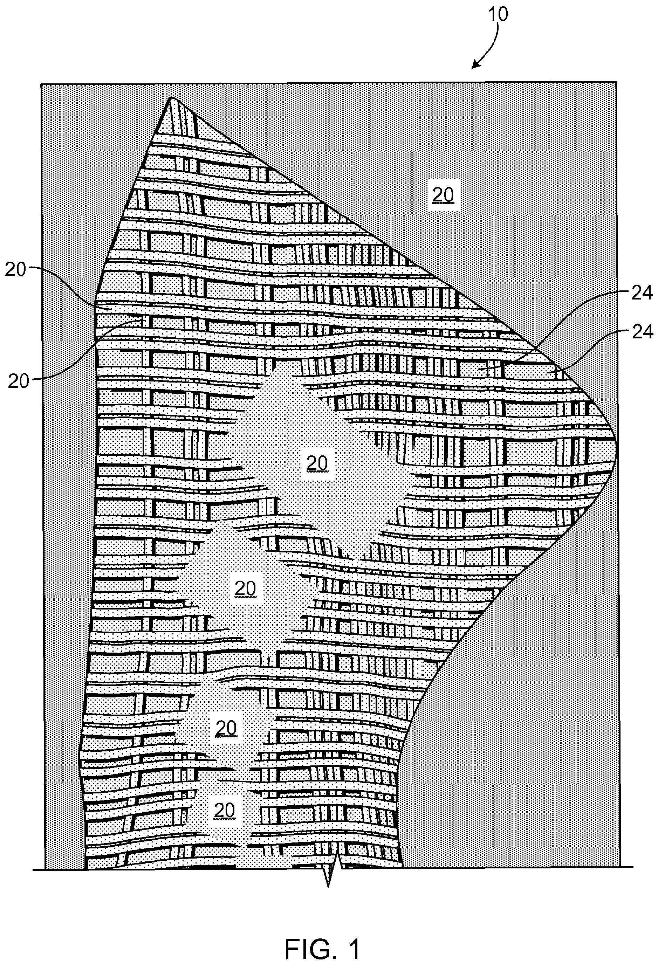

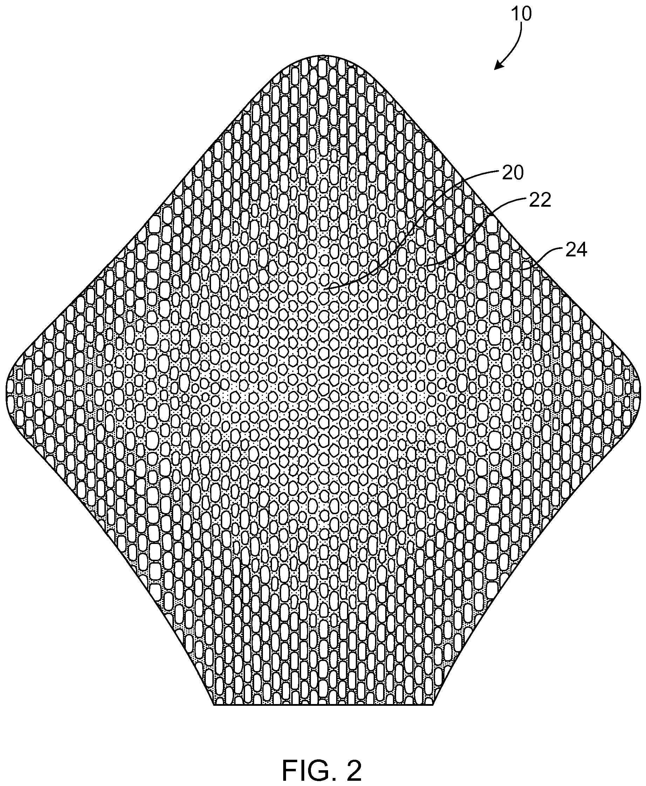

Referring to FIGS. 1 and 2, a unitary engineered thermal fabric 10 suitable for use in an insulated composite fabric defines one or more regions of contrasting performance, e.g., insulation, wind-blocking, air circulation, etc. The engineered thermal fabric including regions of relatively high pile 20, regions of relatively low pile 22 and regions of no pile 24 formed selectively across the fabric in correlation with body regions preferably desiring or requiring relatively higher insulation, intermediate insulation, and little or no insulation, respectively. Referring to FIG. 1, in some implementations, the unitary engineered thermal fabric 10 may have regions 24 of relatively higher pile interspersed with regions 20 of no pile arranged in intricate patterns, e.g., plaids, stripes, or other geometric or abstract patterns.

In some implementations, regions having different thermal insulation properties can also be formed on a unitary engineered thermal fabric by forming regions of pile having different pile densities. The pile in the different regions can have the same height or different heights.

Engineered thermal fabrics are created, and engineered thermal fabric articles, including insulated composite fabrics, e.g., thermal blankets, are formed of such engineered thermal fabrics, for the purpose of addressing thermal insulation and comfort level using the unitary engineered thermal fabric. The engineered thermal fabric articles reduce dependence on using multiple layers, while providing insulation and comfort. The engineered thermal fabric articles, e.g. garments and accessories, and home furnishings, such as blankets, throws, sleeping bags, provide selected contrasting levels of insulation correlated to the requirements and/or desires of the underlying regions of the body, to create an improved comfort zone suited for a wide variety of thermal insulation needs.

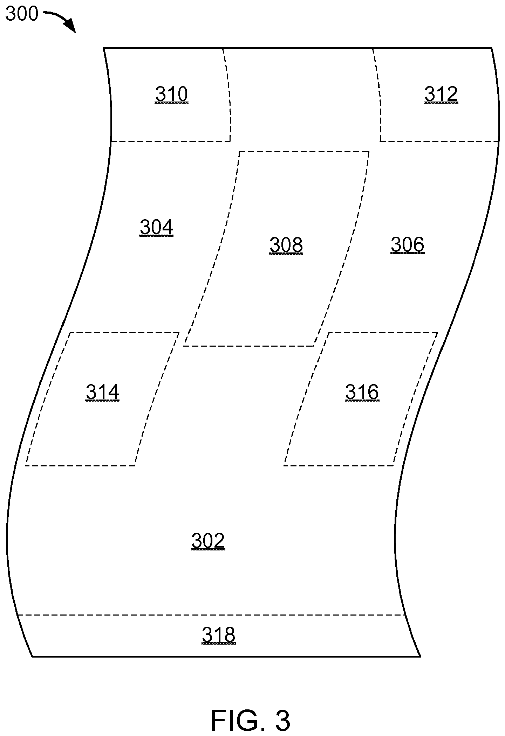

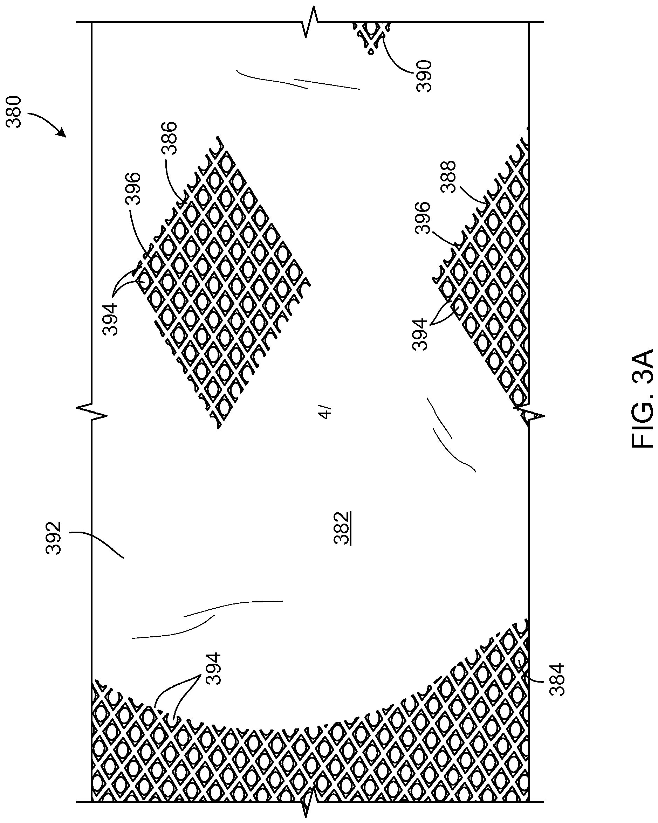

Referring to FIG. 3, an engineered insulated composite fabric 300, e.g., thermal blanket, is shown spread for use on a bed. The blanket may be formed of a unitary engineered thermal fabric, such as the fabric 10 shown in FIGS. 1 and 2 having features discussed above. In particular, the engineered thermal fabric can be a single face raised fabric or double face raised fabric, and the fabric may be warp knit, circular knit, or woven. The region 302 of the person's lower legs and feet and the regions 304, 306 of the person's arms and shoulders have relatively higher pile height and/or relatively higher fiber density. In contrast, the region 308 of the person's upper torso and the regions 310, 312 and the regions 314, 316 adjacent to the person's head and hips, respectively, have relatively low pile or no pile, e.g. depending in personal preference, seasonal conditions, etc. The region 318 below the feet has no pile or low pile, as it is typically tucked beneath the mattress. The fabric of the blanket has a three dimensional geometry, where the thickness of the surfaces of the insulative regions of the head, arms and shoulders, and lower torso, legs and feet are typically in velour, loop, terry in raised surface or sheared/cut loop or as formed.

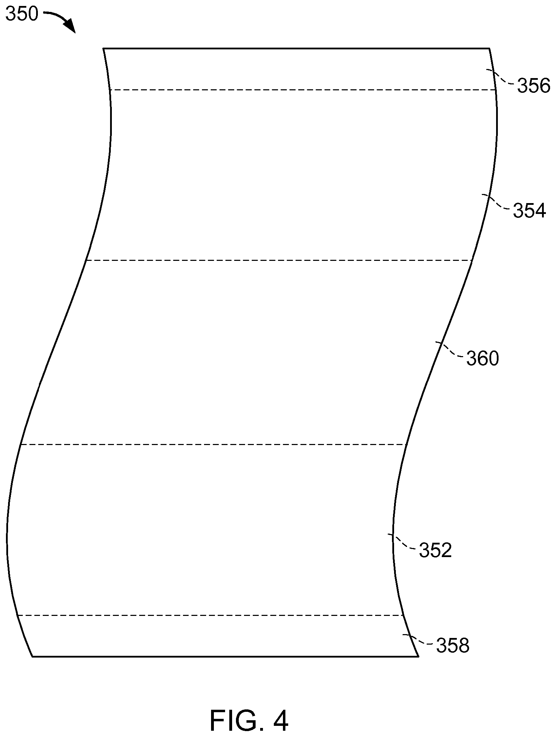

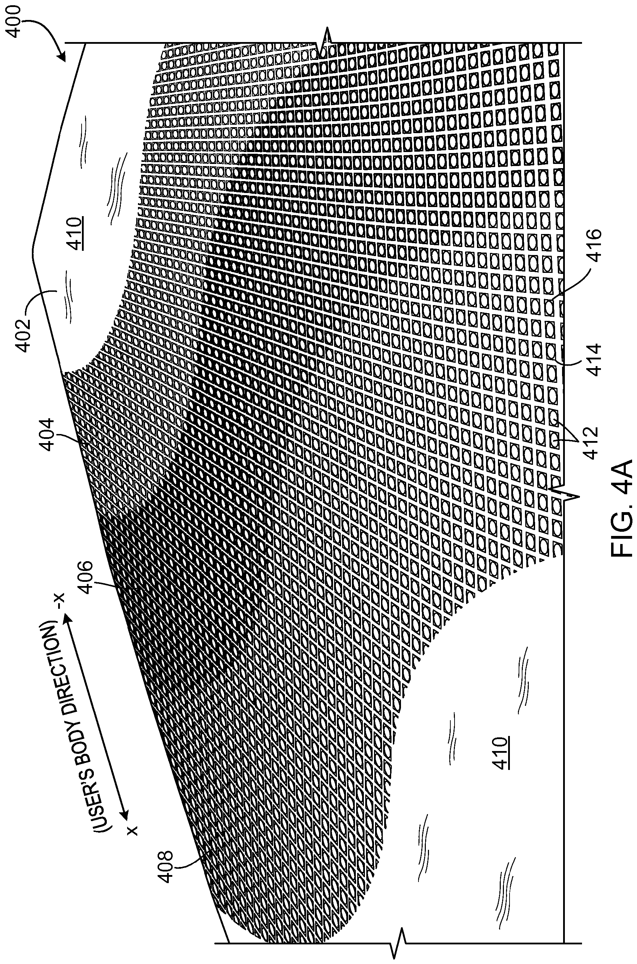

Referring to FIG. 4, another engineered insulated composite fabric 350 in the form of a thermal blanket also formed of a unitary engineered thermal fabric is shown spread for use on a bed. In this implementation, the engineered insulated composite fabric 350, compared to the engineered insulated composite fabric 300, is simplified for purposes of manufacture. The regions of contrasting insulative capacity and performance are arranged in band form, extending across the blanket. A lower band region 352 having relatively higher pile height and/or relatively higher fiber density is positioned to extend generally across the person's lower torso, legs and feet and an upper band region 354 also of relatively higher pile height and/or relatively higher fiber density is positioned to extend generally across the person's arms and shoulders. At the upper and lower extremities, respectively, of the blanket 350, an upper band region 356 of relatively low pile or no pile is positioned to extend generally across the person's head and a lower band region 358 of relatively low pile or no pile is positioned to be folded beneath the blanket. In between region 352 and 354, an intermediate region 360, also of relatively low pile or no pile, is positioned to extend generally across the person's upper torso.

As described above, the surfaces of the region 354 of the head, arms, and shoulders, and the region 352 of the lower torso, legs, and feet are plain velour, while the upper band region 356 and intermediate region 360 are low pile. Typically, the yarn and the pile density are maintained constant for all regions, again for simplicity of manufacture. The vertical widths of the respective regions represented in the drawing are by way of example only. Regions of any dimension can be arranged, tailored, e.g., for use by persons of different ages and different genders, etc. and for other factors, such as seasonality, etc.

Although particular patterns, e.g., formed by high pile, low pile and/or no pile (patterned with high pile regions and low pile regions, high pile regions and no pile regions, low pile regions and no pile regions, and/or high pile regions, low pile regions, and no pile regions), are shown in FIGS. 1 and 2 for the unitary engineered thermal fabrics and in FIGS. 3 and 4 for the insulated composite fabrics, the unitary engineered thermal fabrics and the insulated composite fabrics can have any suitable patterns, e.g., based on the desired thermal insulation properties. The insulated composite fabrics, e.g., thermal blankets, can be part of a bedding system and can work in synergy with other bedding components, e.g., linen, sheets, other blankets, and comforters, in order to provide comfort and thermal insulation to the user.

For example, FIG. 3A shows a segment of an insulated composite fabric 380 having a patterned surface 392 including pile regions 382, 384, 386, 388, 390. In some implementations, all of the pile on the patterned surface 392 has the same pile height. However, the pile regions 384, 386, 388, 390 are patterned to have a lower pile density than the pile density in the pile region 382. In particular, the pile regions 384, 386, 388, 390 include piles 386, 394 separated by no pile or low pile regions 388, 396. The pile region 386 can provide higher thermal insulation than the pile regions 384, 386, 388, 390 due to the higher pile density. The pile in different pile regions 382, 384, 386, 388, 390 can have the same height and/or density, or can have different heights and/or densities, e.g., to provide a thermal insulation gradient.

In some implementations, one or more of the pile regions 384, 386, 388, 390 each can have a pattern formed of contrasting pile heights and/or the same pile height with contrasting pile densities. In the example shown in FIG. 3A, all of the pile regions 384, 386, 388, 390 have the same pile density and the same pattern, with relatively high pile in the circular or oval parts and grid parts 394 and relatively low pile or no pile the remaining regions 396. In addition to the desired thermal properties, the patterned regions 384, 386, 388, 390 provide aesthetic views to the insulated composite fabric 380.

The different pile regions can have different pile densities. Some pile regions can have 100% pile or a full raised surface, while some other regions can have less than 100% pile. Accordingly, using different pile densities in different pile regions, the regions can provide different thermal properties and aesthetic views even when they have the same pattern. The insulated composite fabric 380 can have a double face finish raised on both sides or a single face finish raised only on a single side.

In another example shown in FIG. 4A, an insulated composite fabric 400, e.g., thermal blanket, has multiple band regions 404, 406, 408 extending a width of the insulated composite fabric (similar to the band regions 354, 360 ..., described with reference to FIG. 4). The bands can extend across a width of the insulated composite fabric blanket 400, along the length of the insulated composite fabric 400, or along other directions. The bands can be straight or can have other shaped, e.g., irregular, edges. The insulated composite fabric 400 also includes velour regions 410. The band regions 404, 408, 406 each can be velour or can have patterns. In the example shown in the figure, all band regions have the same pattern, each being similar to the pattern of regions 384, 386, 388, 390 of FIG. 3A, with relatively high pile in oval parts 412 and grid parts 414 and relatively low pile or no pile in remaining regions 416. The pile in corresponding parts of different regions can have the same or different heights. In the example shown, the pile has the same height. However, the pile densities in the three regions 404, 406, 408 are different, with the region 406 having the lowest pile density, the region 408 having the second lowest pile density, and the region 404 having the highest pile density. As a result, the band region 406 has the highest air permeability, e.g., a CFM of 294 (8,325 L/min); the band region 408 has relatively high air permeability, e.g., a CFM of 236 (6,648 L/min.); the band region 404 has less high air permeability, e.g., a CFM of 231 (6,541 L/min.). The velour regions 410 can have the lowest air permeability, e.g., a CFM of 149 (4,219 L/min.). In use, the insulated composite fabric 400, e.g., a thermal blanket, can cover a user's body along the x or -x direction. The blanket provides good thermal insulation in the end regions 410 that corresponding to the user's head, shoulder and lower legs, and provides good air permeability in the middle regions, particularly the band region 406.

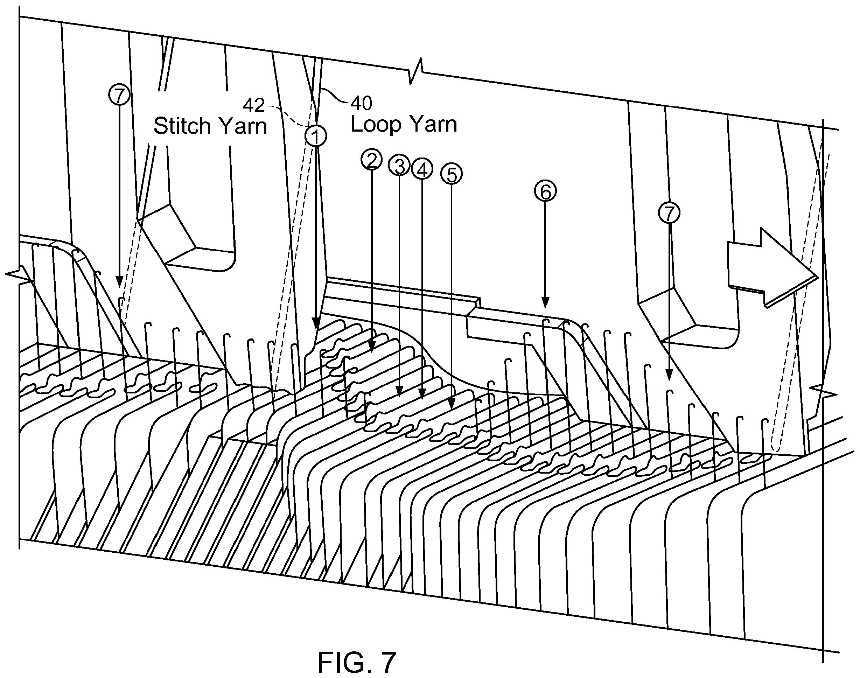

The unitary engineered thermal fabrics can be produced by any procedure suitable for creating regions with different pile heights and/or regions with no pile, in predetermined designs and arrangements. Examples of suitable procedures include, e.g., electronic needle and/or sinker selection, tubular circular or terry loop knit construction, e.g. by reverse plaiting (as described below with respect to FIGS. 7 to 14), to form double face fabric or to form pseudo single face fabric, where the jersey side can be protected by coating for abrasion or pilling resistance (as described below) or can be used as is for laminating, or by regular plaiting, to form single face fabric, warp knit construction, woven construction, and fully fashion knit construction. Any suitable yarn or fibers may be employed in forming the engineered thermal fabrics. Examples of suitable yarn or fibers include, e.g., synthetic yarn or fibers formed, e.g., of polyester, nylon or acrylic; natural yarn or fibers formed, e.g., of cotton or wool; regenerate yarn or fibers, such as rayon; and specialty yarn or fibers, such as aramid yarn or fibers, as sold by E.I. DuPont under the trademarks NOMEX® and KEVLAR®. Flame retardant fiber blends can also be used in the unitary engineered thermal fabrics. The flame retardant fiber blends can contain modacrylic yarns and/or fibers blended with cellulosic with or without other flame retardant fibers.

A pattern of contrasting pile height regions, including one or more regions with no loop pile yarn, is knitted, or otherwise formed, in a unitary fabric. If desired, multiple, different unitary engineered thermal fabrics can then be assembled to form an engineered thermal fabric article, e.g., a garment or the engineered insulated composite fabrics 300, 350 as shown in FIGS. 3 and 4. The patterns of the fabrics are engineered to cover substantial portions of the body surface, each fabric typically having multiple regions of contrasting pile height and/or contrasting air permeability performance, thereby to minimize or avoid the cut-and-sew process typical of prior art thermal fabric articles. The disclosure thus permits construction of engineered thermal fabric articles with very intricate patterns of contrasting thickness, which can be employed, e.g., as integral elements of a blanket design. This level of intricacy generally cannot be achieved by standard cut and sew processes, e.g., simply sewing together a variety of fabric patterns and designs.

During processing, the unitary engineered thermal fabrics may be dyed, and one or both surfaces finished to form regions of contrasting pile loop height, e.g., by raising one or both surfaces, or by raising one surface and cutting the loops on the opposite surface. The degree of raising will depend on the pile height of the loop pile yarn. For example, the knit can be finished by cutting the high loops, or shearing just the high pile, without raising the low loop pile height and/or the no loop pile height. Alternatively, the knit can be finished by raising the loop surface; the high loop will be raised higher on finishing to generate relatively higher bulk/greater thickness, and thus to have relatively increased insulative properties. Regions of contrasting bulk may also be obtained in a reverse circular knit terry construction by knitting two different yarns having significantly different shrinkage performance when exposed to dry or wet heat (e.g., steam or high temperature water) in a predetermined pattern. The very low shrinkage (e.g., 0 to 10% shrinkage) yarn may be spun yarn, flat filament yarn or set textured yarn, and the high shrinkage yarn (e.g., 20 to 60% shrinkage) may be heat sensitive synthetic yarn in flat yarn (like polypropylene) or high shrinkage polyester or nylon textured filament yarn. According to one implementation, the terry sinker loop yarn is cut on the knitting machine itself, where the velour height of the different yarns is identical, and the fabric is then exposed to high temperature (dry heat or wet heat), e.g. during dyeing, to generate differences in relative pile height between contrasting regions of the two types of yarn, based on the contrast in shrinkage characteristics. Contrasting pile height may also be achieved by knitting one yarn into loops to be cut to a desired height on the knitting machine or later in the finishing process in combination with a low pile knitted to a zero pile height (e.g., 0 mm sinker). The engineered thermal fabric articles may also include regions of no loop at all, to provide an additional contrasting level or height of pile (i.e., no pile).

The outer-facing surface (i.e., the technical back loop, or the technical face (jersey), where the latter is preferred for single face fabrics) of the engineered thermal fabrics may also be treated with a resin or chemical binder to form a relatively hard surface for resistance to pilling and/or abrasions, e.g. as described in U.S. Patent Application Publication No. 2005-0095940 and U.S. Patent No. 7,038,177.

The pattern of contrasting pile heights, which may be varied to accommodate any predetermined design, can also be optimized for a variety of different thermal insulation preferences or uses. For example, referring again to FIGS. 1 to 4, regions 20 of relatively higher pile can be situated to provide warmth in desired regions such as the chest and upper back, while regions 24 of the lower back can comprise regions of relatively lower pile and/or no pile. Referring particularly to FIG. 2, in some implementations of engineered thermal fabric articles, regions of patterns of thickness (e.g., stripes, plaids, dots and/or other geometric or abstract patterns, in any combination desired) can be used to create regions 22 of intermediate warmth and breathability. The knit fabric construction will typically have some degree of stretch and recovery in the width direction. Significantly higher stretch and recovery, and/or stretch in both directions (length and width), can be provided as desired, e.g., for an engineered thermal fabric garment or blanket having enhanced comfort as well as body fit or compression, by incorporating elastomeric yarn or spandex, PBT or 3GT, or other suitable material, with mechanical stretch in the stitch yarn position.

In some implementations, in addition to being engineered for controlled insulation, the unitary engineered thermal fabrics described above may be laminated to knit fabrics with velour of at least one pile height, e.g., low, high and/or any combination thereof, or to woven fabrics with or without stretch. Optionally, a membrane may be laminated between the layers of fabric to cause the laminate to be impermeable to wind and liquid water, but breathable (e.g., a porous hydrophobic or non-porous hydrophilic membrane), as in fabric product manufactured by Polartec, LLC, successor to Maiden Mills Industries, Inc., as described in U.S. Patent Nos. 5,204,156; 5,268,212 and 5,364,678. Alternatively, the laminate may be constructed to provide controlled air permeability (e.g., by providing an intermediate layer in the form of a perforated membrane, a crushed adhesive layer, a foam adhesive layer, or a discontinuous breathable membrane), as in fabric product manufactured by Polartec, LLC, successor to Maiden Mills Industries, Inc., as described in U.S. Patent Application Nos. 09/378,344, and U.S. Patent Application Publication Nos. 2002-0025747, 2003-0104735 and 2005-0020160.

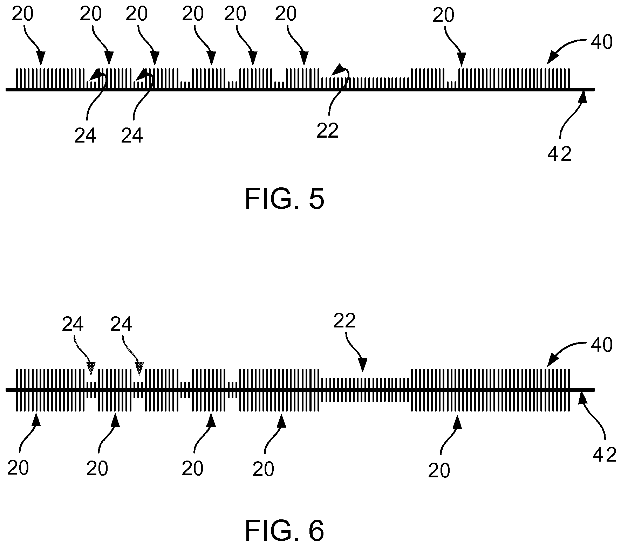

Referring again to FIGS. 1 and 2, and also to FIGS. 5 and 6, unitary engineered thermal fabrics define regions of contrasting pile height, e.g., including regions 20 of relatively higher pile, regions 22 of intermediate or relatively low pile, and regions 24 of no pile, depending on the presence and height of loop yarn 40 relative to, i.e. above, stitch yarn 42. The engineered fabric prebody is thus formed according to a predetermined design, providing regions of relatively higher pile 20, intermediate or relatively lower pile 22, or no pile 24. Referring to FIG. 2, in some implementations, regions 22 of intermediate insulation and breathability may be achieved by a combination or overlap of regions 20 of relatively high pile with regions 24 of no pile.

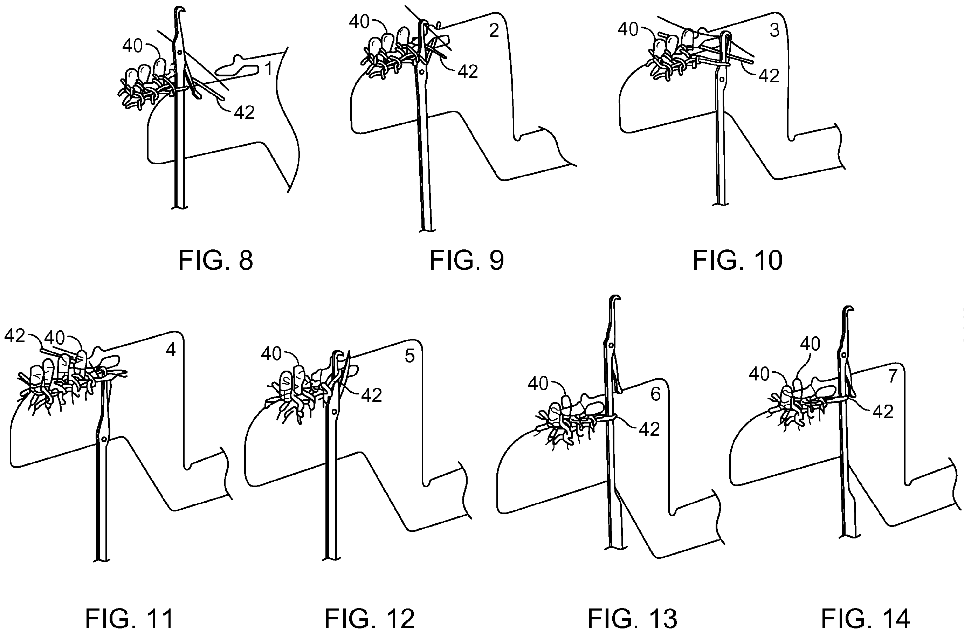

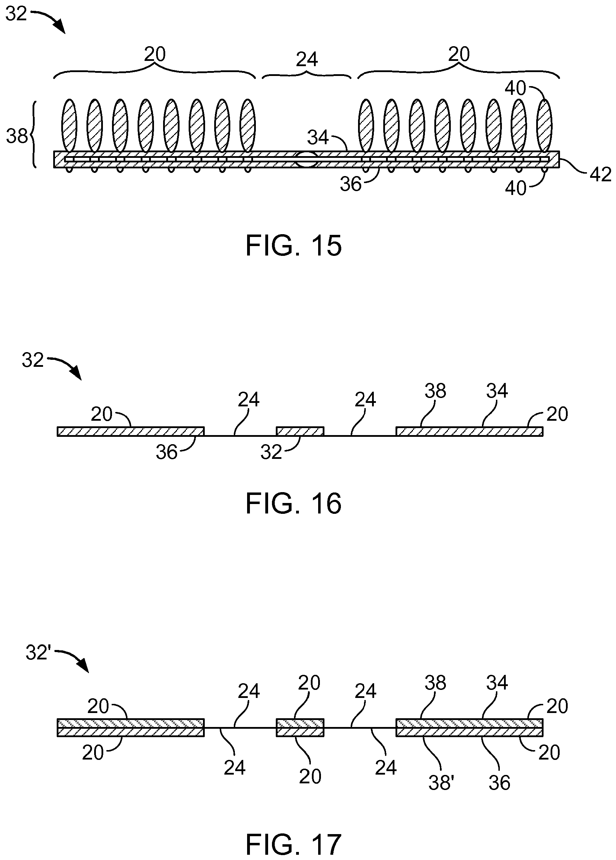

Referring to FIGS. 8 to 14, according to one implementation, a fabric body 12 is formed (in a continuous web) by joining a stitch yarn 42 and a loop yarn 40 in a standard reverse plaiting circular knitting (terry knitting) process, e.g., as described in Knitting Technology, by David J. Spencer (Woodhead Publishing Limited, 2nd edition, 1996). Referring to FIG. 15, in the terry knitting process, the stitch yarn 42 forms the technical face 36 of the resulting fabric body and the loop yarn 40 forms the opposite technical back 34, where it is formed into loops (40, FIG. 13) extending to overlie the stitch yarn 42. In the fabric body 32 formed by reverse plaiting circular knitting, the loop yarn 40 extends outwardly from the planes of both surfaces and, on the technical face 36, the loop yarn 40 covers or overlies the stitch yarn 42 (e.g., see FIG. 15).

As described above, the loop yarn 40 forming the technical back 34 of the knit fabric body 32 can be made of any suitable synthetic or natural material. The cross section and luster of the fibers or filaments can be varied, e.g., as dictated by requirements of intended end use. The loop yarn 40 can be a spun yarn made by any available spinning technique, or a filament flat or textured yarn made by extrusion. The loop yarn denier is typically between about 40 denier to about 300 denier. A preferred loop yarn is a 200/100 denier T-653 Type flat polyester filament with trilobal cross section, e.g., as available commercially from E.I. DuPont de Nemours and Company, Inc., of Wilmington, Delaware, or 2/100/96 texture yarn to increase tortuosity and reduce air flow, e.g., yarn from UNIFI, Inc., of Greensboro, NC.

The stitch yarn 42 forming the technical face 36 of the knit fabric body 32 can be also made of any suitable type of synthetic or natural material in a spun yarn or a filament yarn. The denier is typically between about 50 denier to about 150 denier. A preferred yarn is a 70/34 denier filament textured polyester, e.g., as available commercially from UNIFI, Inc., of Greensboro, NC. Another preferred yarn is cationic dyeable polyester, such as 70/34 T-81 from DuPont, which can be dyed to hues darker or otherwise different from the hue of the loop yarn, to further accentuate a pattern.

In the preferred method, the fabric body 32 is formed by reverse plaiting on a circular knitting machine. This is principally a terry knit, where loops formed by the loop yarn 40 cover or overlie the stitch yarn 42 on the technical face 36 (see FIG. 15).

Referring now to FIGS. 16 and 17, during the finishing process, the fabric body 32, 32' can go through processes of sanding, brushing, napping, etc., to generate a fleece 38. The fleece 38 can be formed on one face of the fabric body 32 (FIG. 16), e.g., on the technical back 34, in the loop yarn, or fleece 38, 38' can be formed on both faces of the fabric body 32' (FIG. 17), including on the technical face 36, in the overlaying loops of the loop yarn and/or in the stitch yarn, with regions of high bulk 20 and low/no bulk 24. The fabric body 32, 32' can also be treated, e.g., chemically, to render the material hydrophobic or hydrophilic.

Also, the unitary engineered thermal fabrics can have pile of any desired fiber density and any desired pile height, with the contrast of insulative capacity and performance achieved, e.g., by relatively different pile heights (e.g., using different sinker heights), relatively different pile densities (e.g., using full face velour and velour with pattern of low pile or no pile), and relatively different types of yarns (e.g., using flat yarns with low shrinkage and texture yarns with high shrinkage). The unitary engineered thermal fabrics having contrasting high pile, low pile, and/or no pile may be generated, e.g., by electronic sinker selection or by resist printing, as described below, and as described in U.S. Provisional Patent Application No. 60/674,535, filed April 25, 2005. For example, sinker loops of predetermined regions of the fabrics may be printed with binder material in an engineered body mapping pattern, e.g., to locally resist raising. The surface is then raised in non-coated regions. The result is a fabric having an engineered pattern of raised regions and non-raised regions. The printed regions may be formed of sub-regions of contrasting thermal insulation and breathability performance characteristics by use of different binder materials, densities of application, penetration, etc., thereby to achieve optimum performance requirements for each sub-region of the engineered printing pattern.

Other aesthetic effects may also be applied to the face side and/or to the back side of the engineered thermal fabric, including, e.g., color differentiation and/or patterning on one or both surfaces, including three dimensional effects. Selected regions may be printed, and other regions may be left untreated to be raised while printed regions remain flat, resisting the napping process, for predetermined thermal insulation and/or breathability performance effects. Also, application of binder material in a predetermined engineered pattern may be synchronized with the regular wet printing process, including in other regions of the fabric body. The wet printing may be applied to fabric articles made, e.g., with electronic sinker loop selection or cut loop (of the pile) of cut loop on the knitting machine and may utilize multiple colors for further aesthetic enhancement. The colors in the wet print may be integrated with the resist print to obtain a three-dimensional print on one or more regions of the fabric, or even over the entire fabric surface. The sizes, shapes and relationships of the respective regions represented in the drawing are by way of example only. Regions of any shape and size can be arranged in any desired pattern, tailored, e.g., for use by persons of different ages and different genders, etc. and for other factors, such as seasonality, etc.

In some implementations, an insulated composite fabric, such as the insulated composite fabrics 300, 350 of FIGS. 3 and 4, includes an insulated composite fabric ("technical down") that incorporates a unitary engineered thermal fabric, such as the unitary engineered thermal fabric discussed above, between inner (to face a user's body) and outer (to face an external environment) fabric layers. In some implementations, the inner and outer fabric layers are identical in structure and the insulated composite fabric is reversible. The outer and inner fabric layers can also have different patterns or configurations (discussed below). The inner and outer fabric layers can provide advantages, e.g., protect the unitary engineered thermal fabric, provide aesthetic effects to the insulated composite fabric, and others, without substantially changing the thermal insulation properties, e.g., heat dissipation rate, provided by the unitary engineered thermal fabric.

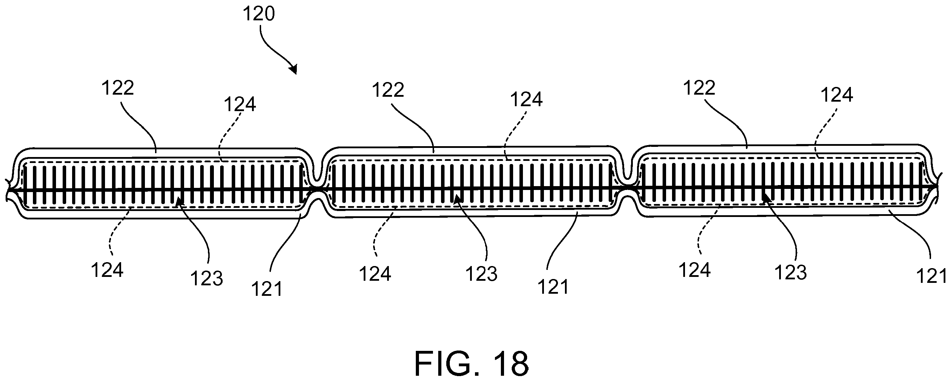

As an example, FIG. 18 illustrates an insulated composite fabric 120, e.g., thermal blanket, that is suitable for forming an entire or a part of an insulated composite fabric. The insulated composite fabric 120 consists of an inner "shell-liner" fabric layer 121; an outer "shell" fabric layer 122; and an insulating-filler fabric layer 123 enclosed therebetween. The insulating-filler fabric layer 123 can be sewn (e.g., quilted as illustrated in FIG. 18) and/or connected with tack stitches) to one or both of the inner and outer fabric layers 121, 122, or, in some cases, a loose insulating-filler fabric layer 123 is anchored in the seams of the blanket along the periphery. Alternatively or additionally, the insulating-filler fabric layer 123 can be attached to one or both of the inner and outer fabric layers 121, 122 by other physical anchoring, e.g., via snapping, tucking, jumping and tucking, ultrasound bonding, lamination, etc.

The insulating-filler fabric layer 123 can have features similar to or the same as the unitary engineered thermal fabrics of FIGS. 1, 2, 5, and 6 and engineered for suitable use in insulated composite fabrics 300, 350 of FIGS. 3 and 4. Accordingly, the term "insulating-filler fabric layer" and the term "unitary engineered thermal fabric" are used interchangeably herein. For example, the insulating-filler fabric layer can be patterned (using high pile, low pile, and/or no pile) based on the thermal configuration and need of the insulated composite fabrics, such the insulated composite fabrics 300, 350 of FIGS. 3 and 4.

In some implementations, the outer fabric layer 122 of the insulated composite fabric has a jacquard pattern to enhance the synergy with the insulating-filler fabric layer 123, and to provide the insulated composite fabric with aesthetic appeal. The outer fabric layer 122 and/ or the inner fabric layer 121 can have a pattern, e.g., formed of regions having contrasting pile heights and/or pile densities, that corresponds to the pattern of the insulating-filler fabric layer to enhance the comfort level of the user. The patterned inner and outer fabric layers 121, 122 do not substantially restrict heat dissipation at the desired regions of the incorporated insulating-filler fabric layer, e.g., regions covering the hip. As a result, the thermal properties of an insulated composite fabric made from an insulated composite fabric are not substantially different from insulated composite fabrics that are made only from the unitary engineered thermal fabric included in the insulated composite fabric. The insulated composite fabric made from the insulated composite fabrics can also provide thermal features as discussed for the insulated composite fabrics 300, 350, e.g., thermal blankets, and can provide superior comfort to a user, e.g., by providing more insulation in predetermined region(s), and lower thermal insulation and better breathability in other region(s) than a conventional blanket provides. The outer and/or inner fabric layer can be a knit having a light weight, e.g., about 1.0 oz./ yard² (33.9 gms/m²) to about 6.0 oz./ yard² (203.4 gms/m²).

In some implementations, the insulating-filler fabric layer 123 is a textile fabric with raised surface on one side or both sides. The textile fabric of the insulating-filler fabric layer 123 is constructed to include face yarn (pile) that is positioned generally perpendicular to stitching or backing yarn. This type of construction can provide high bulk with good resiliency to maintain the thermal insulation of the insulating-filler fabric layer 123 even under compression.

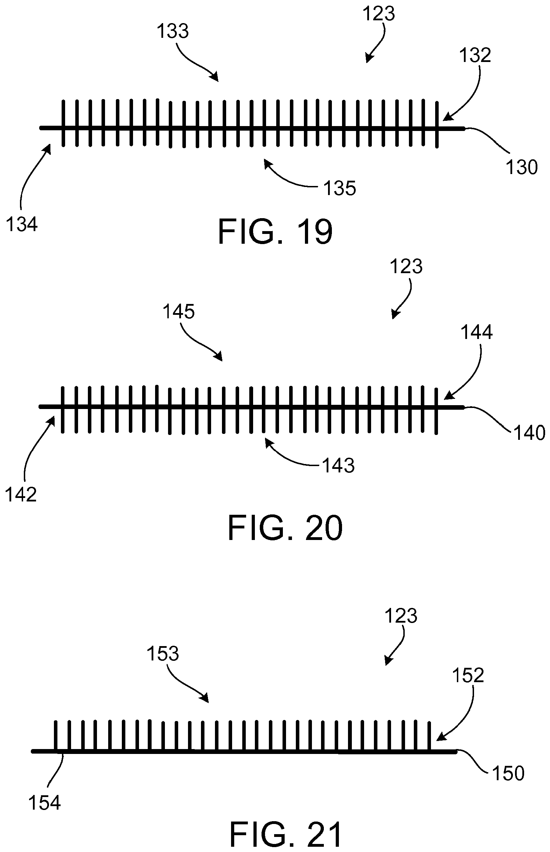

Referring to FIG. 19, the insulating-filler fabric layer 123 may be formed from a double face warp knit fabric 130 that includes a technical back 132 formed of pile yarns brushed to provide a plush velvet surface 133, and a technical face 134 formed of backing yarns and stitching yarns. Either the backing yarns or the stitching yarns of the technical face 134 may be napped to form a fleece/velour 135. Alternatively, in some cases, some of the pile yarns overlay the stitch yarn at the technical face 135 and may be brushed or napped to form a fleece/velour 135 surface at the technical face 135. Additional details regarding the construction of a suitable double face warp knit fabric may be found, e.g., in U.S. Patent No. 6,196,032, issued March 6, 2001; U.S. Patent No. 6,199,410, issued March 13, 2001; U.S. Patent No. 6,832,497, issued December 21, 2004; U.S. Patent No. 6,837,078, issued January 4, 2005; and U.S. Patent No. 5,855,125, issued January 5, 1999. Suitable double face warp knit fabrics are commercially available, e.g., from Polartec, LLC, of Lawrence MA, under the trademark BOUNDARY®.

Alternatively or additionally, the insulating-filler fabric layer 123 may be formed from a double face knit fabric having reverse plaited terry sinker loop knit construction. Referring to FIG. 20, the double face knit fabric with reverse plaited terry sinker loop knit construction 140 has a technical face 142 with a raised or napped surface 143, and a technical back 144 in which sinker loops are sheared to form a cut loop velvet surface 145. Additional details regarding the construction of a suitable double face knit fabric with reverse plaited terry sinker loop knit construction may be found in U.S. Patent No. 6,131,419, issued October 17, 2000.

Referring to FIG. 21, the insulating-filler fabric layer 123 may also be formed from a single face fabric 150 that is constructed to include a technical face 152 with face yarn that is positioned generally perpendicular to stitching or backing yarn 154.

Alternatively, or additionally, the insulating-filler fabric layer 123 may be formed from a fabric having a sliver knit construction. The sliver knit construction can be formed by circular knitting coupled with the drawing-in of sliver of fibers to produce a pile like fabric. The sliver knit construction allows for the use of relatively coarse fiber (e.g., 5 dpf to 15 dpf). This relatively coarse fiber can provide for good resiliency and resistance to compression, and can generate very high pile (e.g., pile height of 3 inches (7.6 cms) to 4 inches (10.2 cms)). The sliver fabric of the insulating-filler fabric layer can be finished as a single face fabric with a raised surface at the technical back, or as a double face fabric with raised surfaces on both the technical back and the technical face. Generally, the sliver knit construction is prone to "shedding" and may exhibit undesirable aesthetic appearance (e.g., poor finish) when raised on the technical face. However, when incorporated as a filler layer, the aesthetic appearance of the raised technical face is less critical since the fabric is enclosed between the outer "shell" fabric layer 122 and the inner "shell-liner" fabric layer 121 (FIG. 18).

In some implementations, the insulating-filler fabric layer 123 may include elastomeric material for enhanced stretch and recovery. For example, the insulating-filler fabric layer 123 may include elastomeric yarns and/or fibers, e.g., incorporated in the backing or stitching yarns. In some examples, the insulating-filler fabric layer 123 has stretch without including elastomeric material.

The insulating-filler fabric layer 123 has a weight of about 1 ounce (28.3 gms) per square yard (0.84 m²) to about 12 ounces (340.2 gms) per square yard (0.84 m²), has relatively high thickness (bulk) (e.g., a thickness of at least about 0.1 inch (2.5 mm), e.g., about 0.1 inch (2.5 mm) to about 1.0 inch (2.5 cms)), and has high insulation per weight unit (e.g., about 0.2 clo/oz² to about 1.6 clo/oz²).

The insulating-filler fabric layer 123 may consist of a hydrophobic fabric, which, in case of water penetration through the outer fabric layer 122 (FIG. 18) will not be held or absorbed, and will be able to dry fast.

The inner and outer fabric layers 121, 122 (FIG. 18) can both be made of woven fabric. Alternatively, in some cases, the inner "shell-liner" fabric layer 121 and/or the outer "shell" fabric layer 122 may instead consist of a knit fabric, such as a knit fabric having a single jersey construction, a double knit construction, a warp knit construction, or a mesh construction. The respective fabrics of the inner and outer fabric layers 121, 122 may be formed of synthetic yarns and/or fibers, regenerated yarns and/or fibers, natural yarns and/or fiber, and combinations thereof.

In some cases, the inner fabric layer 121 and/or the outer fabric layer 122 can also include elastomeric material, such as elastomeric yarns and/or fibers incorporated in the construction of the respective fabrics, for enhanced stretch and recovery. The incorporation of elastomeric material in the inner and outer fabric layers 121, 122 can be particularly beneficial where the insulating-filler fabric layer 123 also has stretch, such that the inner fabric layer 121 and the outer fabric layer 122 can stretch and move with the insulating filler layer 123 for enhanced user comfort.

The moisture vapor transmission rate and the air permeability of the insulated composite fabric 120 can be controlled by the void or openness of the fabric or fabrics of the inner and/or outer fabric layers 121, 122. In some cases, for example, the control of the air permeability of the insulated composite fabric 120 can be achieved by controlling one or more parameters (e.g., yarn size, yarn count, and/or weave density (pick/fill)) of the fabric forming the inner "shell-liner" fabric layer 121 and/or the outer "shell" fabric layer 122. Alternatively, or additionally, the control of the air permeability of the insulated composite fabric 120 can be achieved by applying a coating or film lamination 124 (FIG. 18) to one or more surfaces of the inner fabric layer 121 and/or the outer fabric layer 122.

The respective fabrics of the inner and outer fabric layers 121, 122 can be selected to provide the insulated composite fabric 120 with air permeability within a range of about 1.0 ft³/ft²/min (0.3 m³/m²/min) to about 300 ft³/ft²/min (91.4 m³/m²/min), according to ASTM D-737, under a pressure difference of ½ inch (12.7 mm) of water across the insulated composite fabric 120. Depending on the particular construction, the composite fabric 120 may be tailored toward different end uses. For example, the insulated composite fabric 120 can be constructed to provide cold weather insulation with relatively high air permeability. In this case, the respective fabrics of the inner and outer fabric layers 121, 122 can be selected to provide the insulated composite fabric 120 with an air permeability of about 100 ft³/ft²/min (30.5 m³/m²/min) to about 300 ft³/ft²/min (91.4 m³/m²/min), according to ASTM D-737, under a pressure difference of ½ inch (12.7 mm) of water across the insulated composite fabric 120.

Alternatively, the insulated composite fabric 120 can be constructed to provide cold weather insulation with relatively low air permeability. In this case, the respective fabrics of the inner and outer fabric layers 121, 122 can be selected to provide the insulated composite fabric 120 with an air permeability of about 1 ft³/ft²/min (0.3 m³/m²/min) to about 80 ft³/ft²/min (24.4 m³/m²/min), according to ASTM D-737, under a pressure difference of ½ inch (12.7 mm) of water across the insulated composite fabric 120.

In some cases, the inner fabric layer 121 can have relatively higher air permeability than the fabric of the outer fabric layer 122. Utilizing fabric with relatively higher air permeability for the inner fabric layer 121, which is disposed facing towards the user's body, can help to enhance vapor movement and vapor transmission away from the user's body to help prevent overheating. For example, the inner fabric layer 121 may have an air permeability of about 5 ft³/ft²/min (1.5 m³/m²/min) to about 300 ft³/ft²/min (91.4 m³/m²/min), tested according to ASTM D-737, under a pressure difference of ½ inch (12.7 mm) of water across the inner fabric layer 21, and the outer fabric layer 122 may have an air permeability of about 1 ft³/ft²/min (0.3 m³/m²/min) to about 100 ft³/ft²/min (30.5 m³/m²/min) (e.g., about 1 ft³/ft²/min (0.3 m³/m²/min) to about 30 ft³/ft²/min (9.1 m³/m²/min)), tested according to ASTM D-737, under a pressure difference of ½ inch (12.7 mm) of water across the outer fabric layer 122.

In some implementations, the outer fabric layer 122 with controlled air permeability is rendered flame retardant by including inherent and/or treated flame resistant or flame retardant yarns and/or fibers and/or is woven with 100% polyester or nylon treated for flame retardant features.

### Examples

### Example 1

In a unitary engineered thermal fabric, the height of the higher sinker loop pile is about 2.0 mm to about 5.0 mm, e.g. the relatively higher loop pile height is typically about 3.5 mm and can be about 5 mm to about 6 mm after raising, and the relatively lower sinker loop pile is about 0.5 mm to about 1.5 mm. Regions with relatively higher loop pile generate significantly higher bulk than regions with relatively lower loop pile and, as a result, provide higher insulation levels. Regions with no loop pile do not generate any bulk, and subsequently can have very high breathability to enhance cooling, e.g., cooling by heat of evaporation.

An insulated composite fabric can be made from this unitary engineered thermal fabric alone, or with additional inner and outer fabric layers, such as the inner and outer fabric layers 121, 122 of FIG. 18.

### Example 2

In another engineered thermal fabric article that includes a unitary engineered thermal fabric, one sinker loop pile yarn is employed with a variety of no loop pile in predetermined patterns and contrasting density to create a large region of no loop pile, e.g., in the neck and armpit areas, for minimum insulation; a region of mixed pile and no loop pile in the abdominal area, for medium insulation; and a region of 100% loop pile in the chest area, for maximum insulation.

An insulated composite fabric can be made from this unitary engineered thermal fabric alone, or with additional inner and outer fabric layers, such as the inner and outer fabric layers 121, 122 of FIG. 18.

### Example 3

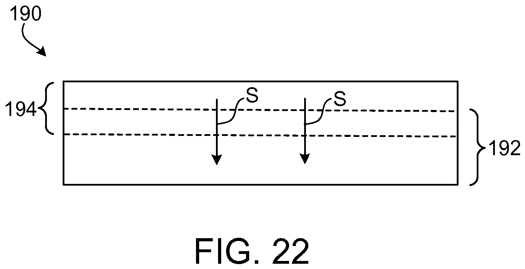

Referring next to FIG. 22, another implementation of a unitary engineered thermal fabric is formed with a plaited construction in which two layers are knit simultaneously, with the layers being separate but integrally intertwined. The plaited knit construction 190 is formed in a single jersey knit or a double knit, with a synthetic yarn having fine dpf being employed to form the outer side layer 192 of the unitary engineered thermal fabric and yarn with relatively coarser dpf being employed to form the inner side layer 194, thereby to promote better water management and user comfort, i.e., by moving liquid sweat (arrows, S) from the inner layer to the outer layer, from where it will evaporate to the ambient environment.

The engineered first layer 194 of the unitary engineered thermal fabric 190, i.e. the inner surface disposed to face the user's skin is further enhanced. For example, the layer may include synthetic fibers, like polyester, treated chemically to render the fibers hydrophilic. Also, spandex may be added to the plaited knit construction to achieve better stretch recovery properties, as well as to obtain two-way stretch, i.e., lengthwise and widthwise. For example, in one implementation, a triple plaited jersey construction is employed, with spandex yarn plaited between an inner layer of coarse fibers of synthetic material treated chemically to render the fibers hydrophilic and an outer layer of natural fibers, such as wool or cotton. The knit fabric may also be formed with double knit or double plaited jersey construction.

The second (outer) layer 192 of the unitary engineered thermal fabric may be provided with anti-microbial properties, e.g. for minimizing undesirable body odors caused by heavy sweating, e.g. due to high exertion, by applying anti-microbial chemicals to the surface 196 of the fabric 190 or by forming the second (outer) fabric layer 192 with yarn having silver ions embedded in the fibers during the fiber/yarn extrusion process or applied to the surface of the fibers (e.g., as described in U.S. Patent No. 6,194,332 and U.S. Patent No. 6,602,811). Yarn employed in forming the first (inner) fabric layer 194 may include fibers containing ceramic particles, e.g. ZrC (zirconium carbide) in order to enhance body heat reflection from the skin, and to provide better thermal insulation (e.g. as described in the U.S. Patent No. 7,217,456).

An insulated composite fabric can be made from this unitary layer engineered thermal fabric alone, or with additional inner and outer fabric layers, such as the inner and outer fabric layers 121, 122 of FIG. 18.

### Example 4

Unitary engineered thermal fabrics for use in insulated composite fabrics may be formed using a suitable knitting system for providing two and/or three contrasting pile heights in one integrated knit construction, which can be finished as single face or double face.

For example, in a first system, sinker loops of contrasting pile height may be generated at different, predetermined regions with high loop (about 3.5 mm loop height and 5 to 6 mm after being raised), low loop and no loop. In second system, the loop yarn may be cut on the knitting machine, forming regions of high pile height (up to about 20 mm) and no pile. In each system, using circular knitting, a single type of yarn may be employed, or yarns of different characteristics, e.g. contrasting shrinkage, luster, cross section, count, etc., may be employed in different regions.

In the case of loops yarn, e.g. as in the first system, the loops may be left as is (without raising), or the highest loops may be cut (leaving the lower loop and no loop "as is"), or both loops may be napped, in which case both loops will generate velour after shearing at the same pile height, and only after tumbling will pile differentiation be apparent, with generation of shearling in the higher loop and small pebble in the lower loop.

In the case of contrasting yarns, as in the second system, differentiation in pile height between different regions will be based on the individual yarn characteristics, which will become apparent after exposure to thermal conditions.

Maximum knitting capability for creation of the discrete regions of contrasting characteristics may be provided by use of electronic sinker loop selection, which will generate different loop heights in the knit construction, and electronic needle selection, which will generate different knit constructions of the stitch yarn, such as 100% knit, knit-tuck, knit-welt, and knit-tuck-welt, with different aesthetics and contrasting air permeability performance in predetermined regions, with our without sinker loops.

### Example 5

A unitary engineered thermal fabric is formed as described above with a pattern of one or more regions having a first pile height and one or more regions having no pile. The one or more regions of first pile height are formed with two different yarns of significantly different shrinkage performance. For example, the yarn having relatively high shrinkage is made of very fine micro fibers, e.g. 2/70/200 tx, and the yarn having relatively less or no shrinkage is made of relatively more coarse and longer fibers, e.g. 212/94 polyester yarn with ribbon shape. When exposed to heat, the fabric forms a textured surface without pattern, resembling animal hair, with long, coarse fibers (like guard hairs) extending upwards from among the short, fine fibers at the surface. This is almost a "pick and pick" construction, or can be termed "stitch and stitch" for knit construction.

An insulated composite fabric can be made from this unitary layer engineered thermal fabric alone, or with additional inner and outer fabric layers, such as the inner and outer fabric layers 121, 122 of FIG. 18.

### Example 6

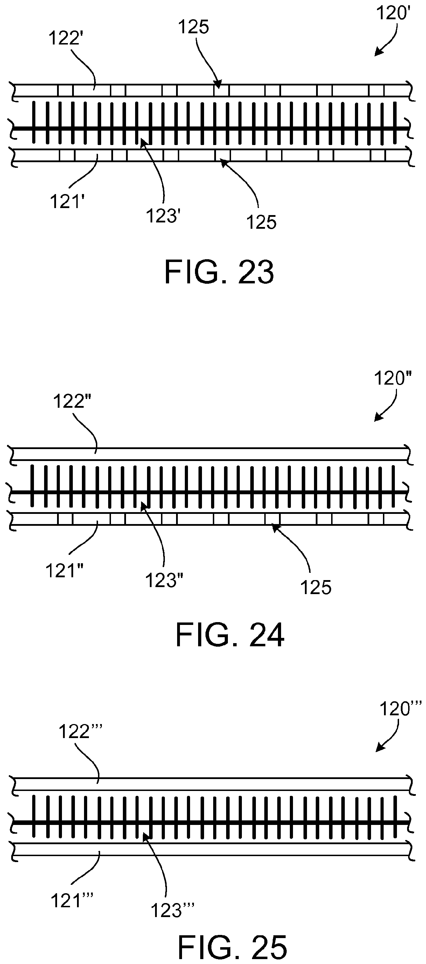

FIG. 23 illustrates one example of an insulated composite fabric 120' with a light-duty construction and suitable for use in an insulated composite fabric. The fabric includes an inner fabric layer 121', an outer fabric layer 122', and an insulating-filler fabric layer 123' enclosed therebetween. Both the inner fabric layer 121' and the outer fabric layer 122' consist of a knit fabric with mesh construction. The mesh construction of the inner and outer fabric layers 121', 122' has a plurality of openings 125. The insulating-filler fabric layer 123' consists of a double face knit fabric (e.g., double face warp knit, double face knit with raised sinker terry loop construction, or double face sliver knit) having a weight of about 1 ounce (28.3 gms) per square yard (0.84 m²) to about 4 ounces (113.4 gms) per square yard (0.84 m²), and a bulk (thickness) of about 0.1 inch (2.5 mm) to about 0.2 inch (5.1 mm). The insulating-filler fabric layer 123' is sewn (e.g., quilted) to one or both of the inner and outer fabric layers 121', 122'. The light-duty insulated composite fabric 120' provides insulation of about 0.8 clo/oz² to about 1.6 clo/oz².

### Example 7

FIG. 24 illustrates an insulated composite fabric 120" with a medium-duty construction and suitable for use in an insulated composite fabric. The medium-duty insulated composite fabric 120" includes an inner fabric layer 121" consisting of a knit fabric with mesh construction, an outer fabric layer 122" consisting of a woven fabric, and an insulating-filler fabric layer 123" enclosed therebetween. The insulating-filler fabric layer 123" consists of a double face knit fabric (e.g., double face warp knit, double face knit with raised sinker terry loop construction, or double face sliver knit) having a weight of about 3 ounces (85.1 gms) per square yard (0.84 m²) to about 8 ounces (226.8 gms) per square yard (0.84 m²)., and a bulk (thickness) of about 0.15 inch (3.8 mm) to about 0.4 inch (10.2 mm). The insulating-filler fabric layer 123" is sewn (e.g., quilted) to one or both of the inner and outer fabric layers 121", 122". The medium-duty insulated composite fabric 120" provides insulation of about 1.0 clo/oz² to about 1.8 clo/oz².

### Example 8

FIG. 25, illustrates an insulated composite fabric 120"' with a heavy-duty construction and suitable for use in an insulated composite fabric. The heavy weight insulated composite fabric 120"' includes an inner fabric layer 121"', an outer fabric layer 122"', and an insulating-filler fabric layer 123"' enclosed therebetween. In this heavy-duty construction, both the inner fabric layer 121"' and the outer fabric layer 122"' consist of a woven fabric. The insulating-filler fabric layer 123'" consists of a double face knit fabric (e.g., double face warp knit, double face knit with raised sinker terry loop construction, or double face sliver knit) having a weight of about 4 ounces (33.4 gms) per square yard (0.84 m²) to about 12 ounces (340.2 gms) per square yard (0.84 m²), and a bulk (thickness) of about 0.2 inch (5.1 mm) to about 1.0 inch (25.4 mm). The insulating-filler fabric layer 123'" is sewn (e.g., quilted) to one or both of the inner and outer fabric layers 121"', 122"'. The heavy-duty insulated composite fabric 120'" provides insulation of about 1.0 clo/oz² to about 3.0 clo/oz².

### Example 9

Two insulated composite fabrics (A, B) were made and their thermal properties were measured using infra-red photography. First insulated composite fabric (A) was made of a stand-alone unitary engineered thermal fabric having double raised surfaces. Second insulated composite fabric (B) included the same unitary engineered thermal fabric as used in the first insulated composite fabric (A). However, the unitary engineered thermal fabric in the second insulated composite fabric (B) was covered by an outer fabric layer and an inner fabric layer, each formed of a light weight knit (e.g., about 3 oz./yard² (101.7 gms/m²)). The first and second insulated composite fabrics (A, B) were each placed over a thermal object held at a constant temperature of 104 °C.

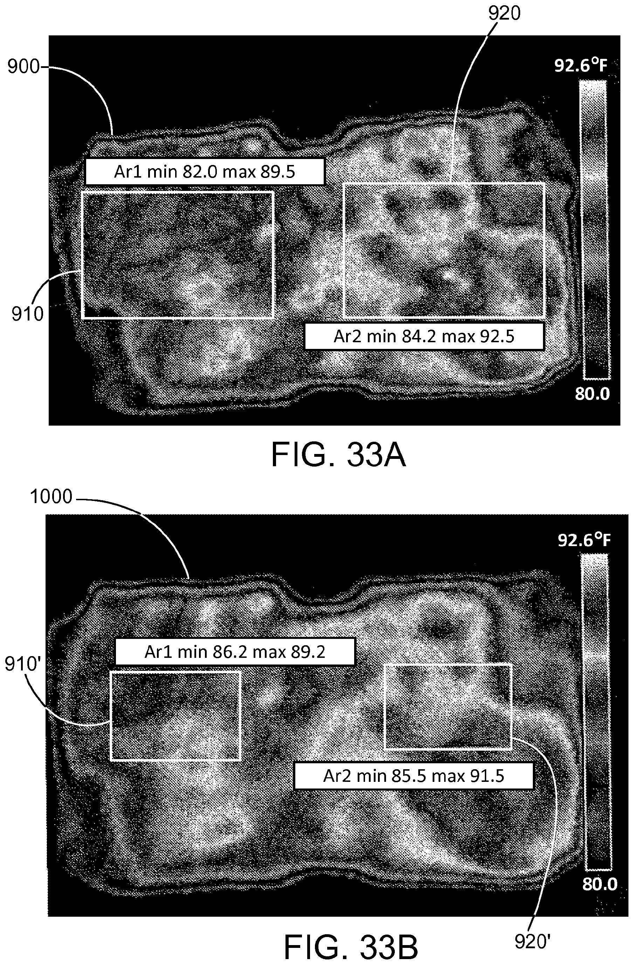

Referring to FIGS. 33A and 33B, after about 15 minutes, infra-red photos 900, 1000 of the first and second insulated composite fabrics (A, B) over the thermal objects were taken. As shown in the photo 900, the unitary engineered thermal fabric provided relatively high thermal insulation within a region 910 and relatively low thermal insulation within another region 920. In other words, heat from the thermal object below the first insulated composite fabric (A) dissipated faster in the region 920 than in the region 910. The photo 1000 showed that the addition of the inner and outer fabric layers, each patterned similarly to the unitary engineered thermal fabric, did not substantially alter the thermal properties shown in photo 900. In particular, a region 910' corresponding to the region 910 of the first insulated composite fabric (A) had relatively high thermal insulation and a region 920' corresponding to the region 920 had relatively low thermal insulation. In addition, the inner and outer fabric layers in the second insulated composite fabric (B) did not substantially restrict desired heat dissipation of the unitary engineered thermal fabric. As shown in photos 900 and 1000, the corresponding regions 910, 910' of the two insulated composite fabrics (A, B) had similar temperatures (89.5°F and 89.2°F (31.9°C and 31.8°C) and the corresponding regions 920, 920' also had similar temperatures (92.5°F and 91.5°F) (33.6 °C and 33.1 °C). In other words, the heat dissipation rate in corresponding regions of the first and second insulated composite fabrics (A, B) were substantially the same.

### Other Embodiments

While certain embodiments have been described above, other embodiments are possible.

For example, an entire insulated composite fabric, e.g., thermal blanket, may be constructed from the unitary engineered thermal fabric or the insulated composite fabric, or, in some cases, an insulated composite fabric may be formed to include multiple unitary engineered thermal fabrics or multiple insulated composite fabrics, e.g., in different regions. In some implementations, an insulated composite fabric may include the unitary engineered thermal fabric(s) or insulated composite fabric(s) only in sections, e.g., the different regions of the insulated composite fabrics 300, 350 of FIGS. 3 and 4.

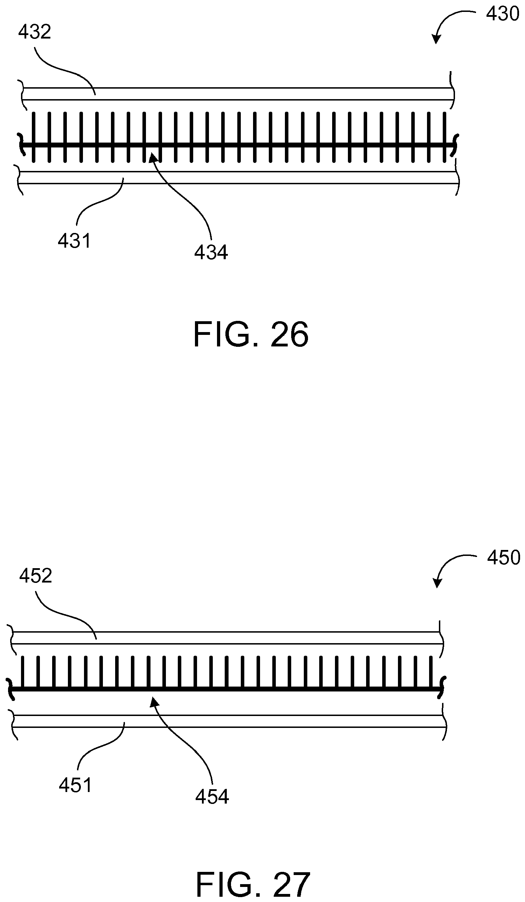

Referring to FIGS. 26 and 27, a first insulated composite fabric 430 and a second insulated composite fabric 450 can be joined together or with other fabrics by stitching at seams to form an insulated composite fabric. The first insulated composite fabric 430 includes a first inner fabric layer 431 that forms an inner surface of the insulated composite fabric to face towards the user's body, a first outer fabric layer 432 that forms an outer surface of the insulated composite fabric to face towards an external environment, and a first insulating-filler fabric layer 434 consisting of a textile fabric with a raised surface on at least one side of the fabric (a double face fabric is shown in FIG. 26). The first insulating-filler fabric layer 434 is enclosed between the first inner fabric layer 431 and the first outer fabric layer 432. The first insulated composite fabric 430 has an air permeability of about 1.0 ft³/ft²/min (0.3 m³/m²/min) to about 80.0 ft³/ft²/min (24.4 m³/m²/min) (e.g., about 4.0 ft³/ft²/min (1.2 m³/m²/min) to about 20.0 ft³/ft²/min (6.1 m³/m²/min)) tested according to ASTM D-737, under a pressure difference of ½ inch (12.7 mm) of water across the first insulated composite fabric 430.

The second insulated composite fabric 450 can be used to cover a different portion of a user's body than the first fabric portion 430, and, like the first insulated composite fabric 430, may also have a construction as described above with regard to FIG. 18. With reference to FIG. 27, the second insulated composite fabric 450 includes a second inner fabric layer 451, which forms an inner surface; a second outer fabric layer 452, which forms an outer surface; and a second insulating-filler fabric layer 454 consisting of a textile fabric with a raised surface on at least one side of the fabric. A single face fabric is shown in FIG. 27, however, the second insulating-filler fabric layer 454 may, alternatively, or additionally, include a double face fabric, e.g., a double face fabric with relatively lower thickness than the fabric of the first insulating-filler fabric layer 434. The second insulating-filler fabric layer 454 is enclosed between the second inner fabric layer 451 and the second outer fabric layer 452. The second insulated composite fabric 450 is constructed to have an air permeability that is different from, and relatively greater than, the air permeability of the first insulated composite fabric 430. The second insulated composite fabric 450 has an air permeability of about 5 ft³/ft²/min (1.5 m³/m²/min) to about 300 ft³/ft²/min (104.4 m³/m²/min), tested according to ASTM D-737, under a pressure difference of ½ inch (12.7 mm) of water across the second insulated composite fabric 450.

Alternatively, or additionally, the first and second insulated composite fabrics 430, 450 can have contrasting stretch. For example, the first insulated composite fabric 430 may have relatively greater stretch (e.g., in the outer shell, the inner shell layer, and/or the insulting-filler) than the second insulated composite fabric 450.

In some cases, unitary engineered thermal fabrics can be used to form an insulated composite fabric. Each unitary engineered thermal fabric can consist of a plain textile fabric, e.g., a circular knit like single jersey (plaited or non-plaited), double knit, rib, warp knit, or woven with and/or without stretch. Or, as another alternative, the unitary thermal fabric may consist of a double face knit fabric having reverse plaited, terry sinker loop, and/or knit construction. Suitable fabrics for forming the unitary thermal fabrics are commercially, available, e.g., from Polartec, LLC, of Lawrence MA, under the trademarks POWER STRETCH™ and BOUNDARY™.

In some cases, the unitary engineered thermal fabric for use in an insulated composite fabric may be incorporated into a laminate composite fabric with outer and inner fabric layers, and a barrier resistant to wind and liquid water, while providing water vapor transport through absorption-diffusion-desorption, including a hydrophilic barrier and/or adhesive layer adhered to the inner and/or outer fabric layer. Suitable laminate composite fabrics are commercially available, e.g., from Polartec, LLC, of Lawrence MA, under the trademarks WINDBLOC® and POWER SHIELD®.

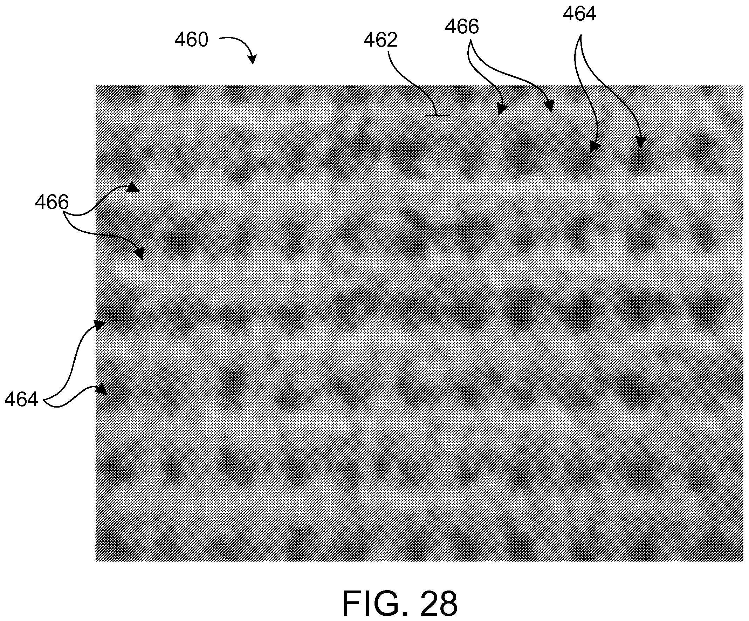

In some cases, enhancing the packability and/or compression (i.e., reducing the total volume of the insulated composite fabric) can be achieved by having voids or pile out regions (i.e., regions of no pile) in a predetermined pattern in the insulating-filler fabric layer. For example, FIG. 28 shows a raised surface knit fabric 460 having a first pile surface 462 that includes regions 464 of no pile interspersed among regions 466 of pile (e.g., pile having a height of at least about 2.0 mm). About 5% to about 70% of the surface area of the insulating-filler fabric can be covered by no pile regions.

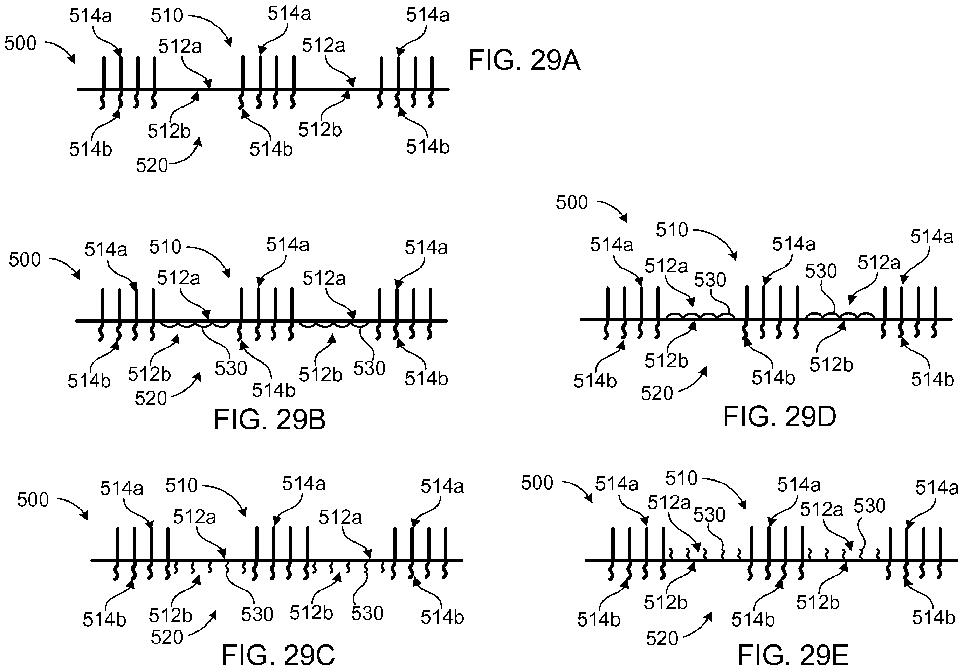

As mentioned above, the raised surface knit fabric of the insulating filler layer may have a construction made on a warp knitting, double needle bar raschel machine, where the pile yarns are grouped in a predetermined pattern, and some predetermined sections have voids (no pile yarn). For example, FIG. 29A illustrates an embodiment of such a raised surface knit fabric 500 having a first pile surface 510 on the technical back that includes void regions 512a (e.g., regions of no pile) interspersed between regions of pile 514a. The fabric 500 also includes a second pile surface 520 (after being raised) on the technical face. As shown in FIG. 13A, the second pile surface 520 also includes void regions 512b (e.g., regions of no pile) interspersed between regions of pile 514b. When incorporated into an insulated composite fabric, such as described above, the pile yarn on the technical back and on the technical face (after raising) will keep the outer "shell" and the inner "shell-liner" fabric layers spaced apart, entrapping stagnant air, maximizing thermal insulation of the insulated composite fabric. The air entrapped between the shell and the shell-liner in the regions of no pile, will provide good thermal performance in static condition at very low air movement or wind.

In dynamic conditions (air flow or wind blowing onto the shell material having controlled air permeability), the thermal insulation in the void region may be reduced. However, the loss of thermal insulation can be reduced by providing relative lower fleece/velour (e.g. lower than the interconnecting pile) in the void regions 512a, 512b. This can be done by adding additional pile yarn 530 (preferably in fine dpf like micro fiber under 5.0 denier, e.g., under 1.0 denier or between 0.3 denier and 5.0 denier) without generating interconnecting pile, but which is held by the stitch and backing yarn along the technical face (FIG. 29) and/or along the technical back (FIG. 29D), and generating fleece/velour on the technical face upon raising the additional pile yarn 530 by napping (FIG. 29C) and/or generating fleece on the technical back upon raising the additional pile yarn 530 by napping (FIG. 29E). This lower fleece/velour (e.g. much lower than that formed by the interconnecting pile) in the void region, with improved tortuosity and reduced air movement (keeping entrapped air stagnate), serves to reduce thermal heat loss by convection.

While embodiments of insulating-filler fabrics have been described that include one or more raised surfaces, in some implementations, e.g., where relatively less insulation is needed, the insulating-filler fabric may instead have a regular knit construction (single or double face), which is finished on one side or both sides by brushing.

In some cases, the outer "shell" fabric layer, the inner "shell-liner" fabric layer, and/or the insulating-filler fabric layer may be formed of, and/or incorporate, flame-retardant materials (e.g., flame retardant fibers), or may be treated (e.g., chemically treated) to provide flame-retardance. In some implementations, the outer "shell" fabric layer is treated with durable water repellent (DWR), an abrasion resistant coating, camouflage, and/or infrared radiation reduction.

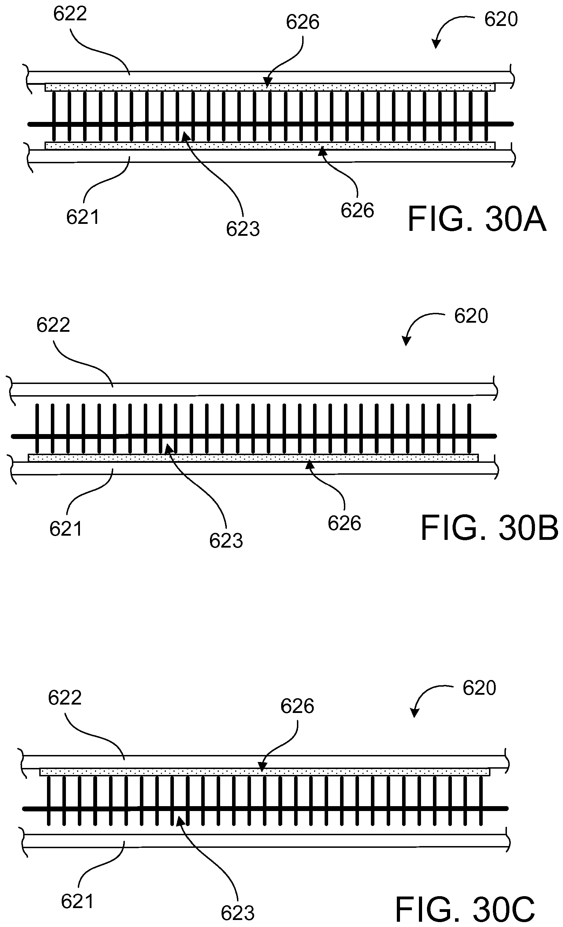

Although embodiments of insulated composite fabrics have been described in which an insulating-filler fabric layer is attached to one or both of an inner fabric layer and an outer fabric layer by sewing, in some cases, the insulating-filler fabric layer may be laminated to one or both of the inner fabric layer and the outer fabric layer. FIG. 30A illustrates an insulated composite fabric laminate 620. The insulated composite fabric laminate 620 includes an inner fabric layer 621, an outer fabric layer 622, and an insulating-filler fabric layer 623 enclosed therebetween. The insulating-filler fabric layer 623 consists of a double face knit fabric that is bonded to the inner fabric layer 621 and the outer fabric layer 622 with an adhesive 626. The adhesive can applied in a manner to substantially avoid further limiting the air permeability of the insulated composite fabric laminate 620. The adhesive can be applied, for example, in a dot coating pattern.

FIG. 30B illustrates an alternative embodiment in which the insulating-filler fabric layer 623 is laminated only to the inner fabric layer 621, and FIG. 30C illustrates another alternative embodiment in which the insulating filler fabric layer 623 is laminated only to the outer fabric layer 622.

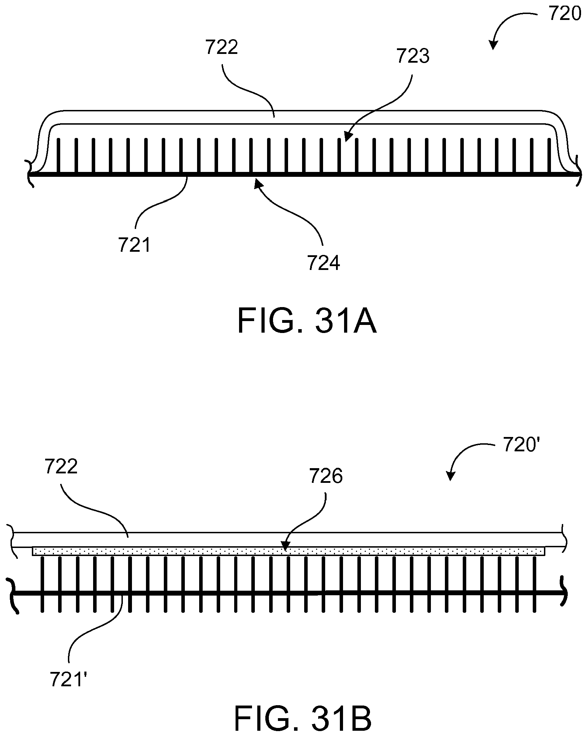

FIG. 31A illustrates yet another example of an insulated composite fabric 720 suitable for use in insulated composite fabrics. The insulated composite fabric 720 of FIG. 31A includes an outer "shell" fabric layer 722 and an inner, insulating fabric layer 721. The outer fabric layer 722 consists of a woven fabric. The insulating fabric layer 721 consists of a single face knit fabric (e.g., single face warp knit, single face knit with raised sinker terry loop construction, or single face sliver knit) having a raised surface 723 (pile or velour) and an opposite, smooth surface 724. The insulating fabric layer 721 is attached to the outer fabric layer 722 (e.g., by sewing (e.g., quilting in any pattern, sewing, tucking, ultrasound bonding, or tack stitching), lamination, anchoring by stitching along seams, or other physical anchoring like snapping, etc.) such that the raised surface 723 faces toward the outer fabric layer 722. The smooth surface 724 of the insulating fabric layer 721 forms an exposed surface of the insulated composite fabric 720. When incorporated in an insulated composite fabric, the smooth surface 724 of the insulating fabric layer 721 can be arranged to form an inner surface of the insulated composite fabric to face towards the user's body.

Either or both of the insulating fabric layer 721 and the outer fabric layer 722 can have stretch in at least one direction. In some cases, for example, either or both of the insulating fabric layer 721 and the outer fabric layer 722 can include elastomeric material (e.g., spandex yarns and/or fibers) for enhanced stretch and shape recovery.

Referring still to FIG. 31A, the moisture vapor transmission rate and the air permeability of the insulated composite fabric 720 can be controlled by the void or openness of the fabric of the outer fabric layer 722. In some cases, for example, the control of the air permeability of the insulated composite fabric 720 can be achieved by controlling one or more parameters (e.g., yarn size, yarn count, and/or weave density (pick/fill)) of the fabric forming the outer fabric layer 722. Alternatively, or additionally, control of the air permeability of the insulated composite fabric 720 can be achieved by applying a coating or by film lamination to one or both surfaces of the outer fabric layer 722.

FIG. 31B illustrates yet another example of an insulated composite fabric 720' suitable for use in an insulated composite fabric. The insulated composite fabric 720' of FIG. 31B includes an outer "shell" fabric layer 722 and an inner, insulating fabric layer 721'. As illustrated in FIG. 31B, the insulating fabric layer 721' consists of a double face knit fabric that is bonded to the outer fabric layer 722 with an adhesive 726 to form a fabric laminate. Alternatively, or additionally, the insulating fabric layer 721' may be connected to the outer fabric layer by quilting (in any pattern), tucking, ultrasound bonding, etc.

Either or both of the insulating fabric layer 721' and the outer fabric layer 722 can have stretch in at least one direction. The moisture vapor transmission rate and the air permeability of the insulated composite fabric 720' can be controlled, e.g. as discussed above with regard to FIG. 31A.

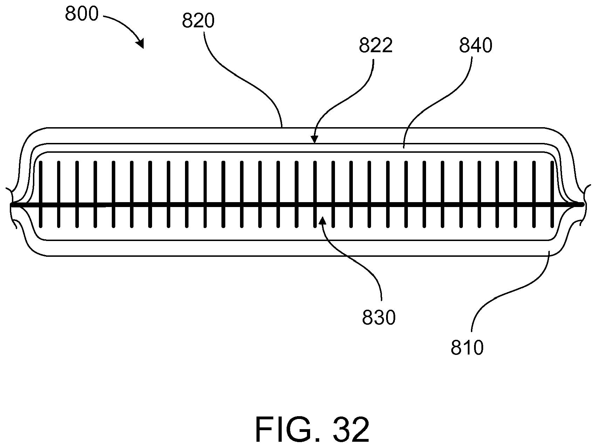

In some cases, the insulated composite fabric for use in an insulated composite fabric may be provided with water resistant properties. For example, the outer "shell" fabric layer may have a very tight construction (e.g., a tight woven construction) and may be treated with durable water repellent (DWR). Alternatively, or additionally, the insulated composite fabric may be provided with a waterproof membrane (e.g., a breathable waterproof membrane). For example, FIG. 32 illustrates an embodiment of an insulated composite fabric 800 that consists of an inner "shell-liner" fabric layer 810, and an outer "shell" fabric layer 820, and an insulating-filler fabric layer 830 enclosed therebetween. In this example, a waterproof membrane 840 is laminated to an inner surface 822 of the outer "shell" fabric layer 820. The water barrier can be made of porous hydrophobic membrane, hydrophilic non-porous membrane, or electrospun material. Preferably, the insulating-filler fabric layer 830 is hydrophobic (e.g., formed of hydrophobic yarns/fibers), which, in case of water penetration through the outer fabric layer 820, the water will not be held or absorbed, and the fabric will be able to dry relatively quickly.

In some embodiments, a reversible insulated composite fabric including an insulated composite fabric may also be provided. For example, the insulated composite fabric can be similar to that described above with reference to FIG. 18, consisting of a first fabric layer, a second fabric layer, and an insulating-filler fabric layer enclosed therebetween. The insulated composite fabric may be reversible, such that both the first fabric layer and the second fabric layer can optionally serve as either an outer "shell" fabric layer or an inner "shell-liner" fabric layer, which will allow the user to have a reversible insulated composite fabric ("technical down"). The first and second fabric layers may be made of fabrics of contrasting color and/or fabrics with contrasting patterns (e.g., camouflage) and/or fabrics with contrasting textures.

In some cases, the insulating-filler fabric layer, or the unitary engineered thermal fabric, may consist of a terry sinker loop (in reverse plaiting or regular plaiting) in which the terry loop is left un-raised. A relatively higher sinker (e.g., 2 to 9 mm) can be used to form the terry sinker loop. In this construction, the terry sinker loop may be provided in a predetermined pattern or design, while having other section(s) without the terry sinker loop (i.e. having voids), to reduce the total weight, as well as increasing the pliability and increasing the "packability" (e.g., by permitting easier folding). As mentioned above, the terry sinker loop can be made in regular plaiting construction, or in reverse plaiting construction. In the case of reverse plaiting constructions, the technical face (jersey side) may be finished, and the technical back may be left in a terry sinker loop (un-napped), or the terry sinker loop may be left on the technical back, without napping the technical face-jersey side (similar to regular plaited construction).

In some implementations, the insulating-filler fabric layer or the unitary engineered thermal fabric may be formed with plaited construction, e.g. plaited jersey or double knit construction, e.g. as described in U.S. Patent No. 6,194,322 and U.S. Patent No. 5,312,667, with a denier gradient, i.e. relatively finer dpf on the outer surface of the fabric and relatively more coarse dpf on the inner surface of the fabric, for better management of water (e.g. liquid sweat). In preferred implementations, one or more regions will be formed with full mesh, i.e. see-through holes, for maximum ventilation, and contrasting regions of full face plaited yarn for movement of moisture, with intermediate regions in other areas of the insulated composite fabric having relatively lesser concentrations of mesh openings, the regions being positioned to correlate with the ventilation requirements of the user's underlying body.

Although the term "blanket" is used throughout the disclosure, such a blanket can be understood to refer to other bedding components, such as linens, sheets, and others.

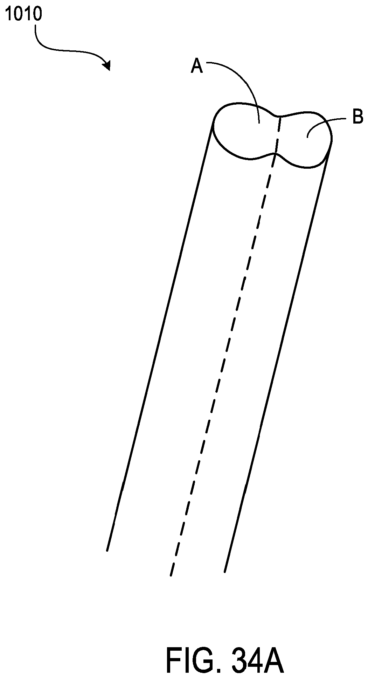

In some implementations, the insulating-filler fabric layer 123 can be formed from a bi-component fiber, as described in U.S. Patent Application Publication No. 2011-0052861. An example of a bi-component fiber 1010 is shown in FIG. 34A. Fiber component 1010 includes two temperature responsive materials, i.e., first and second fiber components A, B arranged in side-by-side relationship. The first and second fiber components A, B exhibit differential thermal elongation, e.g., expansion and or contraction, in response to changes in temperature. As a result, the fiber has a tendency to bend and/or curl in response to ambient conditions. Suitable materials for the first and/or second fiber components A, B include polyester, polyurethane, and nylon.

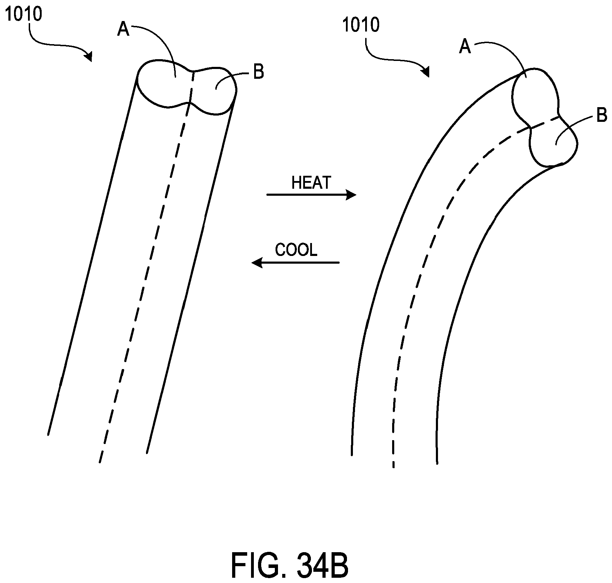

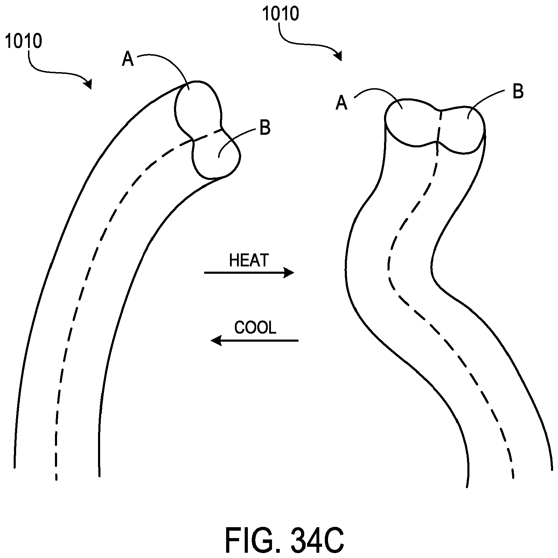

For example, in one embodiment, the first fiber component A has a relatively greater coefficient of thermal expansion (i.e., a relatively greater propensity to grow and/or expand in response to an increase in temperature) as compared to the second fiber component B. When the fiber 1010 is exposed to heat over a given critical temperature range, the first fiber component A expands at a relatively greater rate than the second fiber component B causing the fiber to bend (see, e.g., FIG. 34B). If the differential elongation (e.g., expansion and/or shrinkage) exceeds a certain threshold level the fiber 1010 will tend to curl (see, e.g., FIG. 34C). This process is also reversible with low hysteresis; i.e., the fiber 1010 will return toward its original three dimensional configuration as the temperature returns below the critical temperature range. Suitable bi-component fibers of this type are produced by Mide Technologies Corporation of Medford, Massachusetts.

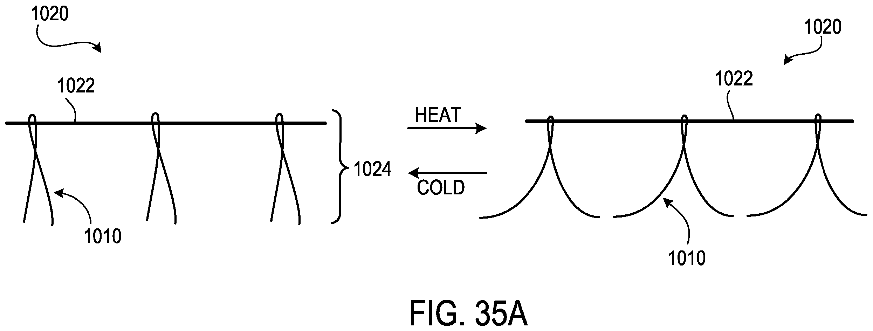

FIG. 35A illustrates a temperature responsive textile fabric 1020 including a raised surface of bi-component fibers 1010 of the kind described above. The fabric 1020 includes a generally sheet-form base 1022, preferably of knit construction, having at least one raised surface 1024 (e.g., pile yarn in warp knit or special circular knit) including a bi-component fiber 1010 (e.g., as a sinker loop yarn, or pile). Yarns formed of the fibers 1010 can have a denier of about 90 to about 500, e.g., about 150 to about 360. Yarns formed of the fibers 1010 can have a tenacity of about 0.5 grams-force per denier to about 5.0 grams-force per denier, e.g., about 2.3 grams-force per denier. Change in thermal insulation of the textile fabric 1020 is a result of change in the bulk/thickness of pile yarn forming the raised surface when the pile yarn is made of bi-component fibers 1010 and exposed to different temperatures.

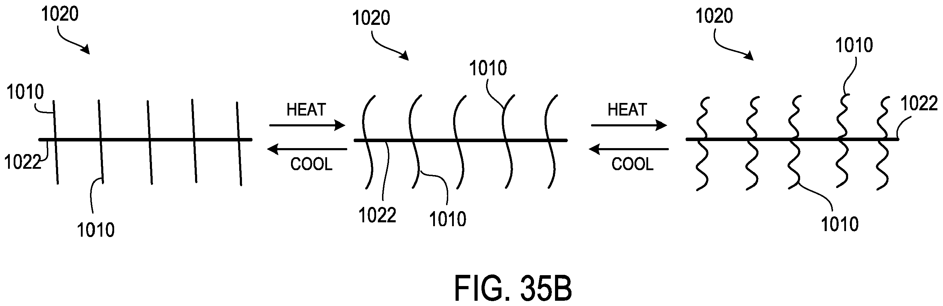

In any of the foregoing knit constructions, elastomeric yarn (e.g., spandex such as Lycra®) may be added to, e.g., the stitch yarn. For example, in some cases, spandex is incorporated into the stitch yarn for enhanced stretch and shape recovery. As the ambient temperature is increased, the fibers of the raised surface(s) begin to bend and/or curl toward the surface changing the loft, volume, and density, i.e., weight per volume, of the fabric, and, as a result, adjust the insulation performance of the fabric 1020. FIG. 35B illustrates the behavioral response of a double face temperature responsive textile fabric.

Preferably, the changes in three dimensional configuration occur over a temperature range of between about 32°F (0°C) and about 120°F (48.9°C), more preferably, between about 50°F (10°C) and about 100°F (37.7°C).

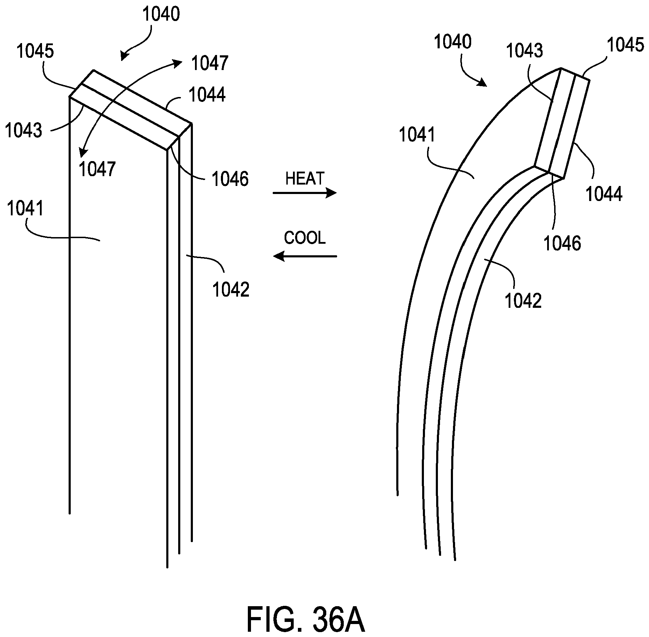

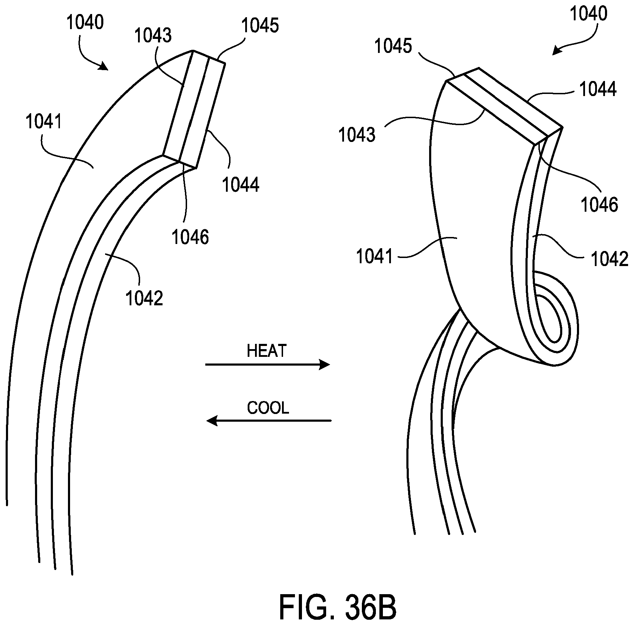

A number of embodiments of the invention have been described. Nevertheless, it will be understood that various modifications can be made without departing from the scope of the claims. For example, the bi-component fibers may have a variety of cross-sectional shapes. FIG. 36A, for example, illustrates one embodiment of a bi-component fiber 1040 having a substantially rectangular cross-section with longer sides 1043, 1044 and shorter sides 1045, 1046. The bi-component fiber 1040 includes two different polymers, i.e., first and second fiber components 1041, 1042 arranged in side-by-side relation, which exhibit differential thermal elongation, e.g., expansion and/or contraction, in response to changes in temperature. In this example, the first fiber component 1041 has a relatively greater coefficient of thermal expansion than the second fiber component 1042. Thus, as with the bi-component fibers described above (e.g., with regard to FIGS. 34A-34C), when the fiber 1040 is exposed to heat over a critical temperature range, the first fiber component 1041 expands at a relatively greater rate than the second fiber component 1042 causing the fiber to bend (see, e.g., FIG. 36A), and, if and/or when the differential elongation (e.g., expansion and/or contraction (shrinkage)) exceeds a certain threshold, the fiber 40 will tend to curl (see, e.g., FIG. 36B). Due to the substantially rectangular cross-sectional shape, the bi-component fiber 1040 will tend to bend relatively more easily along the long sides 1043, 1044 (as indicated by arrow 1047 in FIG. 36A), e.g., as compared to the short sides 1045, 1046. This process is also reversible with low hysteresis; i.e., the fiber 1040 will return toward its original three dimensional configuration once the temperature returns below the critical temperature range.

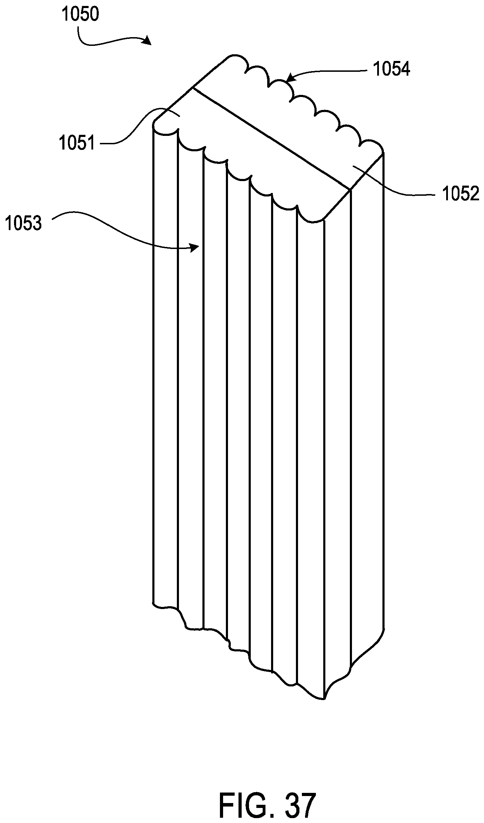

The bi-component fibers can have plain surfaces and/or one or more serrated surfaces. For example, FIG. 37 illustrates a bi-component fiber 1050 that includes first and second fiber components 1051, 1052 having serrated surfaces 1053, 1054. The serrated surfaces can provide a different visual appearance, tactile properties, toughness, and/or light reflectance, e.g., as compared to the plain surfaces illustrated in FIGS. 34A and 37A.

In some embodiments, the bi-component fiber can include two non-compatible polymers (i.e., fiber components) or polymers with poor compatibility such as nylon and polyester. For example, in some cases the bi-component fiber may include nylon and polyester fibers disposed in side-by-side relationship. Fibers formed with non-compatible polymers or polymers with poor compatibility may exhibit a tendency to split; i.e., the individual fiber components may exhibit a tendency to separate, which can alter the effects of the bi-component response to changes in temperature.

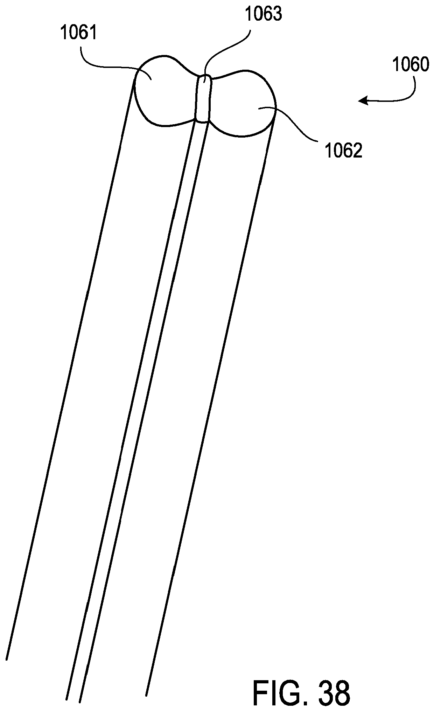

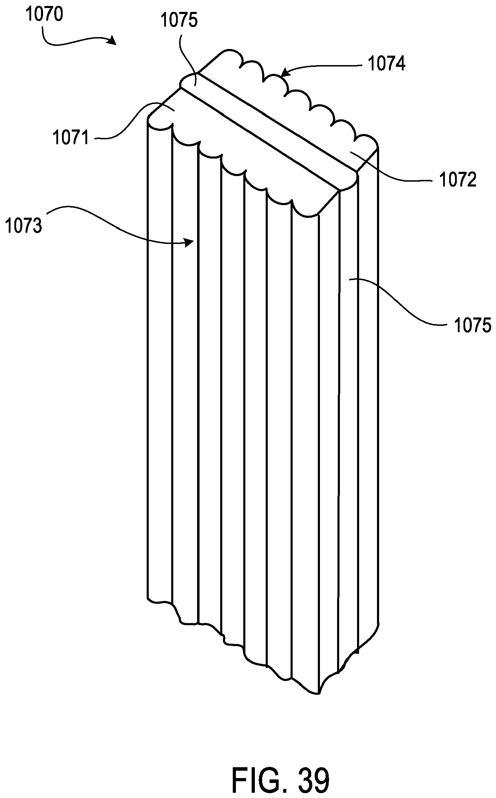

FIGS. 38 and 39 illustrate an approach for inhibiting separation of individual fiber components of a multicomponent fiber. FIG. 38 illustrates the approach as applied to a tri-component fiber 1060 that includes first and second fiber components 1061, 1062 having substantially circular cross-sections. As shown in FIG. 38, a third polymer 1063 is disposed between (e.g., co-extruded with) the first and second polymers (i.e., first and second fiber components 1061, 1062). The third polymer 1063 is used as a bridge or a tie layer to aid in securing the first and second polymers together. The third "bridge" or "tie" polymer 1063 can be more relatively compatible with each of the first and second polymers than the first and second polymer are with each other, thereby providing a stronger bond between the first and second polymers and reducing the likelihood of separation. The third polymer may be a third polypropylene different from both the first polypropylene and the second polypropylene. FIG. 39 illustrates the approach described above with regard to FIG. 38, as applied to a tri-component fiber 1070 that includes first and second fiber components 1071, 1072 having substantially rectangular cross-sections with serrated surfaces 1073, 1074. As shown in FIG. 39 a third polymer 1075 is used as a bridge to secure non-compatible polymers of first and second fibers components 1071, 1072.

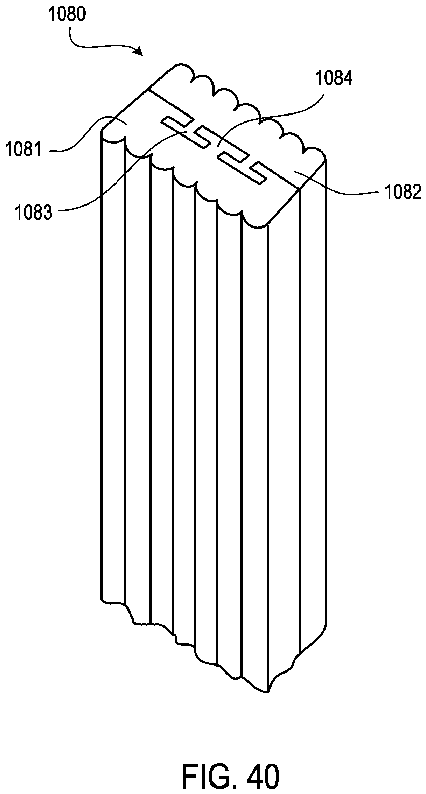

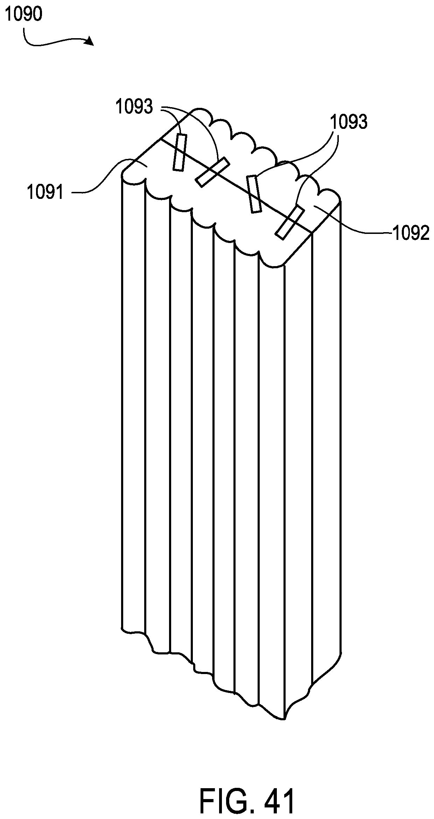

FIGS. 40 and 41 illustrate another approach for inhibiting separation of individual fiber components of a multicomponent fiber, in which the individual fiber components are secured together by physical anchoring. This approach may be used alone or in combination with the bridge or tie approach described above with regard to FIGS. 38 and 39. The physical anchoring can be achieved by providing cooperating, interlocking shapes along mating surfaces at the interface of the fiber components. For example, as shown in FIG. 40, mating surfaces of the first and second fiber components 1081, 1082 are provided with complementary interlocking features 1083, 1084 which operate to anchor the first and second polymer fibers together. Alternatively or additionally, as shown for example in FIG. 41, physical anchoring can be achieved by introducing an additive 1093 into the formulation (such as silicate, zeolite, titanium dioxide (TiO2), etc.), which will facilitate formation of physical or chemical bridge between first and second fiber components 1091, 1092 of a multicomponent fiber 1090, thereby anchoring the fiber components 1091, 1092 together.

In some embodiments, a temperature responsive textile fabric, such as the temperature responsive smart textile fabric of FIGS. 35A and 35B, can incorporate yarns that include bi-component fibers consisting of propylene and polyethylene (e.g., linear low density polyethylene (LLDPE)). At least one of the first polymer and the second polymer is a thermoplastic polymer with low glass transition temperature. The first polymer can be a polypropylene and the second polymer a polyethylene (e.g., linear low density polyethylene), with the resulting bi-component fiber consisting of about 50% polypropylene and about 50% polyethylene. Alternatively, the first polymer can be a first polypropylene (e.g., an isotactic polypropylene) and the second polymer a second polypropylene (e.g., a syndiotactic polypropylene) different from the first polypropylene. Yarns formed of the bi-component fibers can have a denier of about 90 to about 500, e.g., about 150 to about 360, e.g., about 160. Yarns formed of the bi-component fibers can have a tenacity of about 0.5 grams-force per denier to about 5.0 grams-force per denier, e.g., about 2.3 grams-force per denier. The yarn has a filament count of 36 to 144. Change in thermal insulation performance of the textile fabric/fabric garment is a result of change in the bulk/thickness of the pile yarn when the pile yarn is made of bi-component fibers and exposed to different temperatures.

Table 1 lists the particulars and performance of a number of sample yarns formed of bi-component fibers of this disclosure, each consisting of a first polymer (PH-835 polypropylene, manufactured by Basell Canada Inc., Corunna, Ontario, sold under the trademark Pro-fax™ PH835 described in Material Safety Data Sheet PH835 of Basell, Issue Date: 03/28/2000, Revision No.: New MSDS) and a second polymer (linear low density polyethylene, e.g., 8335 NT-7 LLDPE available from The Dow Chemical Company, Midland, MI and described in Material Safety Data Sheet 22539/1001 of Dow Chemical Company, Issue Date: 09/18/2008, Version: 2.2) at a 50/50 ratio.

**Table 1**

| **Sample Yarn #** | **Polymer A** | **Polymer B** | **Material Ratio** | **Filament Cross Section** | **Draw Ratio** | **Average Denier** | **Average Elongation** | **Average Tenacity gpd** |
|---|---|---|---|---|---|---|---|---|
| 1 | PH-835 PP | 8335 NT-7 LLDPE | 50/50 | 144 RND S/S | 4:1 | 320.3 | 101% | 2.39 |
| 2 | PH-835 PP | 8335 NT-7 LLDPE | 50/50 | 72 TRI F/B | 3.50:1 | 159.7 | 111% | 2.28 |
| 3 | PH-835 PP | 8335 NT-7 LLDPE | 50/50 | 144 TRI F/B | 3.5:1 | 317.7 | 118% | 2.24 |

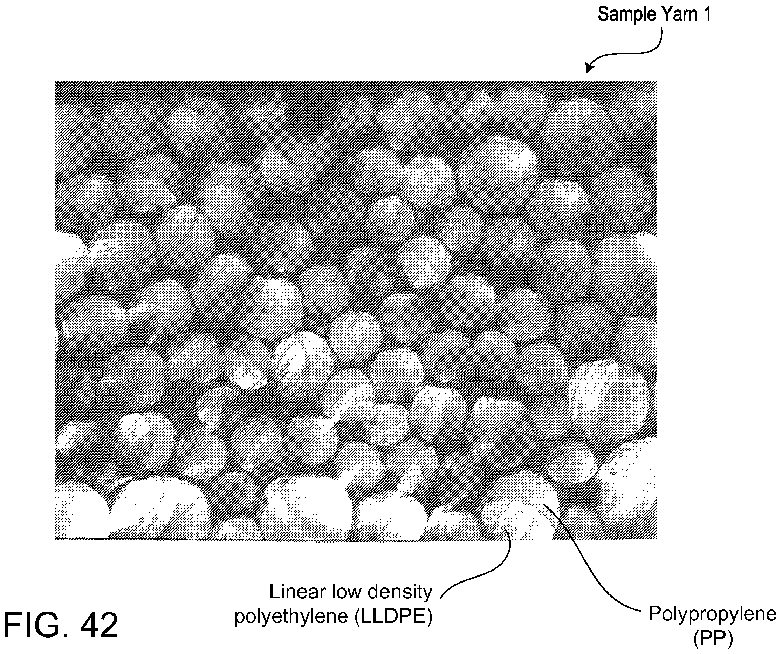

Referring to Table 1, sample yarn 1 was a 144 filament yarn. Sample yarn 1 had an average denier of 320.3, exhibited an average elongation of 101%, and had an average tenacity of 2.39 grams-force per denier (gpd). The filaments of sample yarn 1 have a round (RND) cross-section, in which the first and second polymers had been co-extruded in a side-by-side (S/S) configuration, e.g., as seen in Fig. 42.

A total of four single fiber thermal displacement tests were run on test fibers of sample yarn 1 at the starting temperature of -30°C (-22°F). At -30°C the individual fiber is in a substantially vertical orientation. As the temperature is increased to 0°C (32°F), the loft (i.e., the height of the fiber in the vertical direction) decreases. The loft of the fiber under test continues to decrease as the temperature is increased to +40°C (104°F).

The % Average Displacement for each of the four single fiber thermal displacements tests for sample yarn 1 was calculated by determining a % change in height (loft) H1 for the front view of the fiber under test and a % change in height (loft) H2 for a side view of the fiber under test and then taking an average of those two values. The fiber of sample yarn 1 exhibited an overall average displacement of -15% over the temperature range of -30°C (-22°F) to +40°C (104°F). Identical tests were conducted for sample yarns 2 and 3.

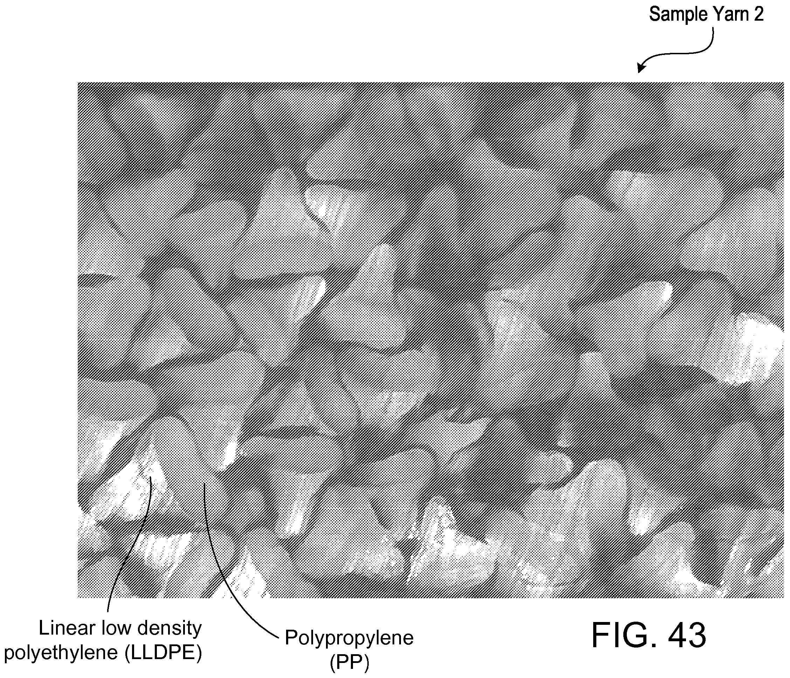

Sample yarn 2 was a 72 filament yarn. Sample yarn 2 had an average denier of 159.7, exhibited an average elongation of 111%, and had an average tenacity of 2.28 grams-force per denier (gpd). The filaments of sample yarn 2 have a trilobal (TRI) cross-section, in which the first and second polymers (PH-835 PP and 8335 NT-7 LLDPE, respectively) had been co-extruded, side-by-side, in a front-to-back (F/B) configuration, e.g., as seen in Fig. 43.

A total of four single fiber thermal displacement tests were also run on test fibers of sample yarn 2. The fibers of sample yarn 2 exhibited a decrease in height with increasing temperatures. The fiber of sample yarn 2 exhibited an overall average displacement of-40% over the temperature range of -30°C (-22°F) to +40°C (104°F).

Sample yarn 3 was a 144 filament yarn having a trilobal cross-section, e.g., similar to the cross section seen in Fig. 43, in which the first and second polymers (PH-835 PP and 8335 NT-7 LLDPE, respectively) have been co-extruded, side-by-side, in a front-to-back (F/B) configuration. Sample yarn 3 had an average denier of 317.7, exhibited an average elongation of 118%, and had an average tenacity of 2.24.

A total of four single fiber thermal displacement tests were run on an individual filament of sample yarn 3. The fiber of sample yarn 3 also exhibited a decrease in height with increasing temperatures. The fiber of sample yarn 3 exhibited an overall average displacement of -12% over the temperature range of -30°C (-22°F) to +40°C (104°F).

The yarns exhibited an overall average displacement of about -5% to about -60%, e.g., about -20% to about -40%, over a temperature range of from -22°F (-30°C) to 104°F (+40°C).

In another embodiment, the filament yarn can have filaments with a trilobal cross-section, where the first and second polymers (PH-835 PP and 8335 NT-7 LLDPE, respectively) have been co-extruded side-by-side, in a left-to-right (L/R) configuration.

Other suitable polypropylenes include 360H PP, available from Braskem PP Americas, Inc., and described in Material Safety Data Sheet CP360H Homopolymer Polypropylene published by Sunoco Chemical, Revision Date: 03/26/2008, which references Material Safety Data Sheet code number C4001 published by Sunoco Chemicals, dated 01/25/06).

Other fiber cross-sections are also within the scope of these claims. For example, a component yarn can include bi-component fibers (polypropylene/polyethylene) having a rectangular cross-section. Other fibers may have a delta cross-section. In some case, for example, yarns may include fibers (e.g., multi-component fibers) having different, relative cross-sectional shapes. For example, some yarns may include round fibers and tri-lobal fibers.

In some embodiments, a temperature responsive textile fabric, suitable for use in a fabric garment, can incorporate yarns that include tri-component fibers consisting of three types of propylene (e.g., Isotactic polypropylene (iPP), Syndiotactic polypropylene (sPP), and Polypropylene PP).

While yarns comprising fibers of various cross-sectional shapes have been described, other shapes are also within the scope of this disclosure, e.g., delta cross-section fibers, which can be incorporated into a multifilament yarn.

In some implementations, the textile fabric may be produced by any procedure suitable for combining yarns and/or fibers to create a finished fabric having at least one raised surface. The first and second materials of the multicomponent fibers can exhibit differential elongation in response to changes in relative humidity, or changes in level of liquid sweat (e.g., where the temperature responsive fabric is incorporated in a garment). The raised surface can be finished as fleece, velour, pile and/or terry loop. The temperature responsive textile fabric can be incorporated in an insulative layer in a multilayer garment system.

## Claims

1. An insulated composite fabric comprising:
an inner fabric layer facing towards the user's body;
an outer fabric layer; and
an insulating-filler fabric layer enclosed between the inner fabric layer and the outer fabric layer,
wherein the insulating-filler fabric layer is a textile fabric with a raised surface on at least one side of the fabric comprising multicomponent fibers formed of at least a first polymer and a second polymer disposed in side-by-side relationship, the first polymer and the second polymer exhibiting differential thermal elongation or contraction to cause the multicomponent fibers to bend or curl and reversibly recover in response to changes in temperature, adjusting insulation performance of the textile fabric in response to ambient conditions, and
wherein the inner fabric layer has a relatively higher air permeability than the outer fabric layer.

2. The insulated composite fabric of claim 1, wherein the first polymer is a polypropylene and the second polymer is a polyethylene, in particular wherein the polyethylene is linear low density polyethylene.

3. The insulated composite fabric of claim 1, wherein the first polymer is a first polypropylene and the second polymer is a second polypropylene different from the first polypropylene, in particular wherein the first polypropylene is an isotactic polypropylene and the second polypropylene is a syndiotactic polypropylene.

4. The insulated composite fabric of claim 3, wherein the multicomponent fibers further comprise a third polypropylene different from both the first polypropylene and the second polypropylene.

5. The insulated composite fabric of claim 1, wherein the yarn has a denier of about 90 and to about 500, in particular wherein the yarn has a denier of about 160.

6. The insulated composite fabric of claim 1, wherein the yarn has a tenacity of about 0.5 grams-force per denier to about 5.0 grams-force per denier.

7. The insulated composite fabric of claim 6, wherein the yarn has a tenacity of about 2.3 grams-force per denier.

8. The insulated composite fabric of claim 1, wherein the yarn has a filament count of 36 to 144, in particular wherein the yarn is a 72 filament yarn.

9. The insulated composite fabric of claim 1, wherein the multicomponent fibers have a round cross-section and the first polymer and the second polymer are arranged in a side-by-side configuration.

10. The insulated composite fabric of claim 1, wherein the multicomponent fibers have a rectangular cross-section and the first polymer and the second polymer are arranged in a side-by-side configuration.

11. The insulated composite fabric of claim 1, wherein the multicomponent fibers have a delta cross-section.

12. The insulated composite fabric of claim 1, wherein the multicomponent fibers exhibit an overall average displacement of about -5% to about -60% over a temperature range of from -22°F (-30°C) to 104°F (+40°C), in particular wherein the multicomponent fibers exhibit an overall average displacement of about -20% to about -40% over a temperature range of from - 22°F (-30°C) to 104°F (+40°C).

## Patentansprüche

1. Isoliertes Verbundgewebe, umfassend:
eine innere Gewebeschicht, die zu dem Körper des Benutzers zeigt;
eine äußere Gewebeschicht; und
eine Isolierfüllstoff-Gewebeschicht, die zwischen der inneren Gewebeschicht und der äußeren Gewebeschicht eingeschlossen ist,
wobei die Isolierfüllstoff-Gewebeschicht ein Textilgewebe mit einer erhabenen Oberfläche an wenigstens einer Seite des Gewebes ist, das Mehrkomponentenfasern umfasst, die aus wenigstens einem ersten Polymer und einem zweiten Polymer, die in einer nebeneinanderliegenden Beziehung angeordnet sind, gebildet sind, wobei das erste Polymer und das zweite Polymer unterschiedliche Wärmedehnung oder -kontraktion aufweisen, um zu bewirken, dass sich die Mehrkomponentenfasern als Antwort auf Temperaturveränderungen biegen oder kräuseln und sich reversibel rückstellen, wodurch die Isolierleistung des Textilgewebes als Antwort auf Umgebungsbedingungen eingestellt wird, und
wobei die innere Gewebeschicht eine vergleichsweise höhere Luftdurchlässigkeit als die äußere Gewebeschicht aufweist.

2. Isoliertes Verbundgewebe gemäß Anspruch 1, wobei das erste Polymer ein Polypropylen ist und das zweite Polymer ein Polyethylen ist, insbesondere wobei das Polyethylen lineares low density Polyethylen ist.

3. Isoliertes Verbundgewebe gemäß Anspruch 1, wobei das erste Polymer ein erstes Polypropylen ist und das zweite Polymer ein zweites Polypropylen ist, das von dem ersten Polypropylen verschieden ist, insbesondere wobei das erste Polypropylen ein isotaktisches Polypropylen ist und das zweite Polypropylen ein syndiotaktisches Polypropylen ist.

4. Isoliertes Verbundgewebe gemäß Anspruch 3, wobei die Mehrkomponentenfasern ferner ein drittes Polypropylen umfassen, das sowohl von dem ersten Polypropylen als auch von dem zweiten Polypropylen verschieden ist.

5. Isoliertes Verbundgewebe gemäß Anspruch 1, wobei das Garn einen Denier-Wert von etwa 90 und bis etwa 500 aufweist, insbesondere wobei das Garn einen Denier-Wert von etwa 160 aufweist.

6. Isoliertes Verbundgewebe gemäß Anspruch 1, wobei das Garn eine Festigkeit von etwa 0,5 Gramm Kraft pro Denier bis etwa 5,0 Gramm Kraft pro Denier aufweist.

7. Isoliertes Verbundgewebe gemäß Anspruch 6, wobei das Garn eine Festigkeit von etwa 2,3 Gramm Kraft pro Denier aufweist.

8. Isoliertes Verbundgewebe gemäß Anspruch 1, wobei das Garn eine Filamentzahl von 36 bis 144 aufweist, insbesondere wobei das Garn ein 72-Filament-Garn ist.

9. Isoliertes Verbundgewebe gemäß Anspruch 1, wobei die Mehrkomponentenfasern einen runden Querschnitt aufweisen und das erste Polymer und das zweite Polymer in einer nebeneinanderliegenden Konfiguration angeordnet sind.

10. Isoliertes Verbundgewebe gemäß Anspruch 1, wobei die Mehrkomponentenfasern einen rechteckigen Querschnitt aufweisen und das erste Polymer und das zweite Polymer in einer nebeneinanderliegenden Konfiguration angeordnet sind.

11. Isoliertes Verbundgewebe gemäß Anspruch 1, wobei die Mehrkomponentenfasern einen dreieckigen Querschnitt aufweisen.

12. Isoliertes Verbundgewebe gemäß Anspruch 1, wobei die Mehrkomponentenfasern eine mittlere Gesamtverlagerung von etwa -5 % bis etwa -60 % über einen Temperaturbereich von -22 °F (-30 °C) bis 104 °F (+40 °C) zeigen, insbesondere wobei die Mehrkomponentenfasern eine mittlere Gesamtverschiebung von etwa -20 % bis etwa -40 % über einen Temperaturbereich von -22 °F (-30 °C) bis 104 °F (+40 °C) zeigen.

## Revendications

1. Tissu composite isolé comprenant :
une couche de tissu interne orientée vers le corps de l'utilisateur ;
une couche de tissu externe ; et
une couche de tissu à charge isolante enfermée entre la couche de tissu interne et la couche de tissu externe,
la couche de tissu à charge isolante étant un tissu textile comportant une surface surélevée sur au moins un côté du tissu comprenant des fibres à plusieurs composants formées d'au moins un premier polymère et un deuxième polymère disposés dans une relation côte à côte, le premier polymère et le deuxième polymère présentant une élongation ou contraction thermique différentielle pour amener les fibres à plusieurs composants à se plier ou se courber et se rétablir de manière réversible en réponse à des changements de température, ajustant la performance d'isolation du tissu textile en réponse aux conditions ambiantes, et
la couche de tissu interne ayant une perméabilité à l'air relativement plus élevée que la couche de tissu externe.

2. Tissu composite isolé selon la revendication 1, le premier polymère étant un polypropylène et le deuxième polymère étant un polyéthylène, en particulier le polyéthylène étant un polyéthylène basse densité linéaire.

3. Tissu composite isolé selon la revendication 1, le premier polymère étant un premier polypropylène et le deuxième polymère étant un deuxième polypropylène différent du premier polypropylène, en particulier le premier polypropylène étant un polypropylène isotactique et le deuxième polypropylène étant un polypropylène syndiotactique.

4. Tissu composite isolé selon la revendication 3, les fibres à plusieurs composants comprenant en outre un troisième polypropylène différent à la fois du premier polypropylène et du deuxième polypropylène.

5. Tissu composite isolé selon la revendication 1, le fil possédant un denier d'environ 90 et à environ 500, en particulier le fil possédant un denier d'environ 160.

6. Tissu composite isolé selon la revendication 1, le fil possédant une ténacité d'environ 0,5 grammes-force par denier à environ 5,0 grammes-force par denier.

7. Tissu composite isolé selon la revendication 6, le fil possédant une ténacité d'environ 2,3 grammes-force par denier.

8. Tissu composite isolé selon la revendication 1, le fil possédant un nombre de filaments de 36 à 144, en particulier le fil étant un fil à 72 filaments.

9. Tissu composite isolé selon la revendication 1, les fibres à plusieurs composants possédant une section transversale arrondie et le premier polymère et le deuxième polymère étant agencés dans une configuration côte à côte.

10. Tissu composite isolé selon la revendication 1, les fibres à plusieurs composants possédant une section transversale rectangulaire et le premier polymère et le deuxième polymère étant agencés dans une configuration côte à côte.

11. Tissu composite isolé selon la revendication 1, les fibres à plusieurs composants possédant une section transversale en forme de delta.

12. Tissu composite isolé selon la revendication 1, les fibres à plusieurs composants présentant un déplacement moyen global d'environ -5 % à environ -60 % sur une plage de température allant de -22 °F (-30 °C) à 104 °F (+40 °C), en particulier les fibres à plusieurs composants présentant un déplacement moyen global d'environ -20 % à environ -40 % sur une plage de température allant de -22 °F (-30 °C) à 104 °F (+40 °C).
